# EUROPEAN PATENT SPECIFICATION

(11) **EP 4 369 166 B1**
(45) Date of publication and mention of the grant of the patent: **29.07.2026**
(21) Application number: 22863123.0
(22) Date of filing: 16.08.2022
(51) Int. Cl.: G06F 3/0486, G06F 3/0481, G06F 3/04883, G06F 3/14, G06F 9/451

(54) **CONTROL CONTENT DRAGGING METHOD AND SYSTEM, AND ELECTRONIC DEVICE**
VERFAHREN UND SYSTEM ZUM ZIEHEN VON STEUERINHALTEN UND ELEKTRONISCHE VORRICHTUNG
PROCÉDÉ ET SYSTÈME DE GLISSEMENT DE CONTENU DE COMMANDE, ET DISPOSITIF ÉLECTRONIQUE

(30) Priority: 31.08.2021 CN 202111015143
(43) Date of publication of application: 15.05.2024
(73) Proprietor: Huawei Technologies Co., Ltd., Shenzhen, Guangdong 518129 (CN)
(72) Inventor: WANG, Bo, Shenzhen, Guangdong 518129 (CN)
(74) Representative: Epping - Hermann - Fischer
(86) International application number: PCT/CN2022/112820
(87) International publication number: WO 2023/029983

(56) References cited:
- WO-A1-2021/052147
- WO-A1-2021/129186
- CN-A- 107 066 172
- CN-A- 110 618 970
- CN-A- 112 631 535
- US-A1- 2018 335 914
- US-A1- 2021 084 136
- US-A1- 2022 342 850

## Description

### TECHNICAL FIELD

This application relates to the field of terminal technologies, and in particular, to a control content drag method and system, and an electronic device.

### BACKGROUND

To better meet use requirements of users, a display of an electronic device is increasingly large in recent years, so that the display of the electronic device can simultaneously display a plurality of application windows.

Currently, a user can drag control content in one window to another window. For example, there are two windows displayed on a display of a mobile phone: an application window 1 and an application window 2. There is one photo in the window 1, for example, a photo A. It is assumed that the user touches and holds the photo A. In this case, an application corresponding to the application window 1 may detect the touch and hold event, and then invoke a system interface to enable a drag function. Then, the user may perform a drag operation. After the user drags the photo A to the application window 2, the user may release the photo A, and an application corresponding to the application window 2 may display the photo A in the application window 2.

In the foregoing drag method, the application corresponding to the window needs to be adapted to the drag function, and the drag function is actively triggered by the application. If the application is not adapted to the drag function, the photo A cannot be dragged.

WO 2021/052147 A1 discloses a data transmission method. The method includes: in a projection scenario, a first device displays, in a first display area of a display, a first user interface of a first application running on the first device, and displays, in a second display area of the display, a second user interface that is being displayed by a second device. The second user interface includes one or more file objects. A user may drag a first file object on the second user interface to the first user interface to release, so that the second device transfers the first file object to the first device. Then, the first device stores the first file object, and provides the first file object for the first application for processing. In embodiments, application data of one device can be directly shared to an application of another device without switching a user interface for a plurality of times. US 2021/084136 Al discloses an information processing method including establishing a connection between a first electronic device and a second electronic device; receiving display data through a first transmission channel, the display data corresponding to a display image of the second electronic device; displaying the display image in a first display area of the first electronic device; and receiving first input information and second input information. The method further includes converting the second input information into a control instruction; if the first input information being in the first display area: converting the first input information into conversion information and transmitting the conversion information and the control instruction through a second transmission channel to cause the second electronic device to respond to the control instruction; and if the first input information being in a second display area, responding to the control instruction based on the first input information by the first electronic device.

US 2018/335914 Al discloses a drag and drop for touchscreen devices. The subject technology provides for receiving a request for a representation of an item from a destination application. The subject technology sends the request for the representation of the item to a source application. The subject technology receives a link to a file provider, the file provider fulfilling a data transfer of the representation of the item. Further, the subject technology sends the link to the file provider to the destination application.

### SUMMARY

This application provides a control content drag method and system, and an electronic device, to resolve a relatively large adaptation workload and poor user experience in a conventional technology that are caused because an application needs to be adapted to a drag function. The invention is defined in the claims.

According to a first aspect, this application provides a control content drag method. The method includes: A first electronic device displays a first window and a second window. The first window and the second window belong to a same application or different applications. A drag unit of the first electronic device detects a touch and hold operation on a first control in the first window. The drag unit does not belong to an application to which the first window belongs or an application to which the second window belongs. Then, in response to a drag operation that uses the touch and hold operation as a drag start operation, the drag unit transfers content of the first control from the first window to the second window. The drag operation is used to drag the content of the first control from the first window to the second window.

**In** the foregoing technical solution, the drag unit of the electronic device detects the touch and hold operation performed by a user, and triggers a drag function. The application does not need to be adapted to the drag function, reducing an application adaptation workload and improving user experience.

**In** a possible design, the drag unit belongs to an operating system of the first electronic device. According to the foregoing technical solution, the operating system of the electronic device may be used to drag the control content, and the drag function does not need to be detected and triggered by an application to which a window belongs. This improves user experience.

**In** a possible design, the drag unit belongs to a framework layer of the operating system.

**In** a possible design, that a drag unit of the first electronic device detects a touch and hold operation on a first control in the first window includes: determining, based on a location of the touch and hold operation, that the touch and hold operation is the touch and hold operation on the first control in the first window.

According to the foregoing technical solution, it may be determined, based on the location of the touch and hold operation, that the touch and hold operation is the touch and hold operation on the first control, that is, a specific control touched and held by the user may be determined.

**In** a possible design, after the drag unit of the first electronic device detects the touch and hold operation on the first control in the first window, and before the content of the first control is transferred from the first window to the second window, the method further includes: The drag unit determines, based on a control type of the first control, that the first control supports the drag function.

According to the foregoing technical solution, whether a control supports the drag function may be determined based on a control type. When it is determined that the control supports the drag function, control content can be obtained and then transferred to another window.

In a possible design, that the drag unit transfers content of the first control from the first window to the second window includes:
The drag unit detects a drag end operation; the drag unit determines a first input control in the second window based on a location of the drag end operation. The drag unit uses the content of the first control as input content of the first input control.

According to the foregoing technical solution, the input control in the second window may be determined based on the location of the drag end operation, and the control content is further transferred to the second window as the input content of the input control.

In a possible design, that the drag unit determines a first input control in the second window based on the location of the drag end operation includes:
The drag unit determines, based on the location of the drag end operation, that a window on which the drag end operation is performed is the second window. The drag unit uses a control in an input state in the second window as the first input control, or uses an input control that is closest to the location of the drag end operation in the second window as the first input control.

According to the foregoing technical solution, the drag unit of the electronic device may first determine, based on the location of the drag end operation, that the window on which the drag end operation is performed, and then determine the input control of the control content in the window on which the drag end operation is performed.

In a possible design, before the content of the first control is transferred from the first window to the second window, the method further includes: determining whether the application to which the first window belongs starts the operation of transferring the content of the first control from the first window to the second window. If the application starts the operation of transferring the content of the first control from the first window to the second window, the drag unit does not perform the drag function. If the application does not start the operation of transferring the content of the first control from the first window to the second window, the drag unit triggers the drag function, and performs the operation of transferring the content of the first control from the first window to the second window.

In a possible design, after the drag unit detects the drag end operation, the method further includes: determining whether the first input control listens to a drag end event. If the first input control listens to the drag end event, the drag unit does not perform the step of transferring the content of the first control to the second window. If the first input control does not listen to the drag end event, the drag unit performs the step of transferring the content of the first control to the second window. According to a second aspect, this application further provides a control content drag method, applied to a system including a first electronic device and a second electronic device. The method includes:
The first electronic device displays a first window and a second window. The first window is an application window of the first electronic device, and the second window is an application window that is projected by the second electronic device onto the first electronic device. The first electronic device detects a drag end operation of a drag operation. The drag operation is used to drag content of a first control in the first window from the first window to the second window. The first electronic device sends a drag end event to the second electronic device. The drag end event includes a location of the drag end operation and the content of the first control. A second drag unit of the second electronic device receives the drag end event sent by the first electronic device.

The second drag unit does not belong to an application to which the second window belongs. The second drag unit transfers the content of the first control to the second window based on the location of the drag end operation.

According to the foregoing technical solution, the control content can be dragged from the local window of the electronic device to the projection window in a projection scenario. In addition, the drag unit of the electronic device is used to receive the control content. The application does not need to be adapted to a drag function, and the system can trigger the drag function of the control content, to drag out and drag in the control content. This can reduce an application adaptation workload.

In a possible design, that the second drag unit transfers the content of the first control to the second window based on the location of the drag end operation includes:
The second drag unit determines a first input control in the second window based on the location of the drag end operation, and uses the content of the first control as an input of the first input control.

In a possible design, before the first electronic device detects the drag end operation of the drag operation, the method further includes: A first drag unit of the first electronic device detects a touch and hold operation on the first control. The drag unit does not belong to an application to which the first window belongs. In response to the drag operation that uses the touch and hold operation as a drag start operation, the first drag unit obtains the content of the first control.

**In** a possible design, the first drag unit belongs to an operating system of the first electronic device, and the second drag unit belongs to an operating system of the second electronic device.

**In** a possible design, that a first drag unit of the first electronic device detects a touch and hold operation on the first control includes:
The first drag unit of the first electronic device determines, based on a location of the touch and hold operation, that the touch and hold operation is the touch and hold operation on the first control in the first window.

**In** a possible design, after the first drag unit of the first electronic device detects the touch and hold operation on the first control, and before detecting the drag end operation of the drag operation, the method further includes:
The first drag unit determines, based on a control type of the first control, that the first control supports the drag function.

**In** a possible design, that the second drag unit determines a first input control in the second window based on the location of the drag end operation includes:
The second drag unit determines, based on the location of the drag end operation, that a window on which the drag end operation is performed is the second window. The second drag unit uses a control in an input state in the second window as the first input control, or uses a control that is closest to the location of the drag end operation in the second window as the first input control. According to a third aspect, this application further provides a control content drag method, applied to a first electronic device. The method includes: The first electronic device displays a first window and a second window. The first window is an application window of the first electronic device, and the second window is an application window that is projected by a second electronic device onto the first electronic device. The first electronic device detects a drag end operation of a drag operation. The drag operation is used to drag content of a first control in the first window from the first window to the second window. The first electronic device sends a drag end event to the second electronic device, so that a second drag unit of the second electronic device transfers the content of the first control to the second window based on a location of the drag end operation. The drag end event includes the location of the drag end operation and the content of the first control.

**In** a possible design, before the first electronic device detects the drag end operation of the drag operation, the method further includes:
A first drag unit of the first electronic device detects a touch and hold operation on the first control. The drag unit does not belong to an application to which the first window belongs. **In** response to the drag operation that uses the touch and hold operation as a drag start operation, the first drag unit obtains the content of the first control.

**In** a possible design, the first drag unit belongs to an operating system of the first electronic device. **In** a possible design, that a first drag unit of the first electronic device detects a touch and hold operation on the first control includes:
The first drag unit of the first electronic device determines, based on a location of the touch and hold operation, that the touch and hold operation is the touch and hold operation on the first control in the first window.

**In** a possible design, after the first drag unit of the first electronic device detects the touch and hold operation on the first control, and before detecting the drag end operation of the drag operation, the method further includes:
The first drag unit determines, based on a control type of the first control, that the first control supports a drag function.

According to a fourth aspect, this application further provides a control content drag method, applied to a second electronic device. The method includes: A second drag unit of the second electronic device receives a drag end event that is sent by a first electronic device. The drag end event includes a location of a drag end operation and content of a first control. The second drag unit does not belong to an application to which a second window belongs. The second drag unit transfers the content of the first control to the second window based on the location of the drag end operation.

**In** a possible design, that the second drag unit transfers the content of the first control to the second window based on the location of the drag end operation includes:
The second drag unit determines a first input control in the second window based on the location of the drag end operation, and uses the content of the first control as an input of the first input control.

**In** a possible design, the second drag unit belongs to an operating system of the second electronic device.

**In** a possible design, that the second drag unit determines a first input control in the second window based on the location of the drag end operation includes:
The second drag unit determines, based on the location of the drag end operation, that a window on which the drag end operation is performed is the second window. The second drag unit uses a control in an input state in the second window as the first input control, or uses a control that is closest to the location of the drag end operation in the second window as the first input control.

According to a fifth aspect, this application further provides a control content drag method, applied to a system including a first electronic device and a second electronic device. The method includes: The first electronic device displays a first window and a second window. The first window is an application window that is projected by the second electronic device onto the first electronic device, and the second window is an application window of the first electronic device. The first electronic device sends a touch and hold event to the second electronic device when detecting a touch and hold operation on the first window. The touch and hold event includes coordinates of the touch and hold operation. A second drag unit of the second electronic device receives the touch and hold event, determines a first control in the first window based on the coordinates of the touch and hold operation, and obtains content of the first control. The second drag unit does not belong to an application to which the first window belongs. The second drag unit sends the content of the first control to the first electronic device. The first electronic device transfers the content of the first control to the second window when detecting a drag end operation of a drag operation. The drag operation is used to drag the content of the first control from the first window to the second window. According to the foregoing technical solution, the control content in the projection window can be dragged to the local window in a projection scenario. The application does not need to be adapted to a drag function, and the system can trigger the drag function of the control content, to drag out and drag in the control content. This can reduce an application adaptation workload.

**In** a possible design, the transferring, that the first electronic device transfers the content of the first control to the second window when detecting a drag end operation of a drag operation includes: A first drag unit of the first electronic device transfers the content of the first control to the second window when detecting the drag end operation of the drag operation. The first drag unit does not belong to an application to which the second window belongs.

**In** a possible design, the first drag unit belongs to an operating system of the first electronic device, and the second drag unit belongs to an operating system of the second electronic device.

**In** a possible design, before the second drag unit of the second electronic device obtains the content of the first control, the method further includes:
The second drag unit determines, based on a control type of the first control, that the first control supports the drag function.

**In** a possible design, that a first drag unit of the first electronic device transfers the content of the first control to the second window when detecting the drag end operation of the drag operation includes:
The first drag unit determines a first input control in the second window based on a location of the drag end operation.

The first drag unit uses the content of the first control as input content of the first input control. **In** a possible design, that the first drag unit determines a first input control in the second window based on a location of the drag end operation includes:
The first drag unit determines, based on the location of the drag end operation, that a window on which the drag end operation is performed is the second window. The first drag unit uses a control in an input state in the second window as the first input control, or uses a control that is closest to the location of the drag end operation in the second window as the first input control.

According to a sixth aspect, this application further provides a control content drag method, applied to a first electronic device. The method includes: The first electronic device displays a first window and a second window. The first window is an application window that is projected by a second electronic device onto the first electronic device, and the second window is an application window of the first electronic device. The first electronic device sends a touch and hold event to the second electronic device when detecting a touch and hold operation on the first window. The touch and hold event includes coordinates of the touch and hold operation. The first electronic device receives content of a first control that is sent by the second electronic device, and transfers the content of the first control to the second window when detecting a drag end operation of a drag operation. The drag operation is used to drag the content of the first control from the first window to the second window.

**In** a possible design, the transferring, that the first electronic device transfers the content of the first control to the second window when detecting a drag end operation of a drag operation includes: A first drag unit of the first electronic device transfers the content of the first control to the second window when detecting the drag end operation of the drag operation. The first drag unit does not belong to an application to which the second window belongs.

**In** a possible design, the first drag unit belongs to an operating system of the first electronic device. **In** a possible design, that a first drag unit of the first electronic device transfers the content of the first control to the second window when detecting the drag end operation of the drag operation includes:
The first drag unit determines a first input control in the second window based on a location of the drag end operation. The first drag unit uses the content of the first control as input content of the first input control.

**In** a possible design, that the first drag unit determines a first input control in the second window based on a location of the drag end operation includes:
The first drag unit determines, based on the location of the drag end operation, that a window on which the drag end operation is performed is the second window. The first drag unit uses a control in an input state in the second window as the first input control, or uses a control that is closest to the location of the drag end operation in the second window as the first input control.

According to a seventh aspect, this application further provides a control content drag method, applied to a second electronic device. The method includes: A second drag unit of the second electronic device receives a touch and hold event. The touch and hold event includes coordinates of a touch and hold operation. The second drag unit determines a first control in a first window based on the coordinates of the touch and hold operation, and obtains content of the first control. The second drag unit does not belong to an application to which the first window belongs. The second drag unit sends the content of the first control to a first electronic device, so that the first electronic device transfers the content of the first control to a second window when detecting a drag end operation of a drag operation.

In a possible design, the second drag unit belongs to an operating system of the second electronic device.

In a possible design, before the second drag unit of the second electronic device obtains the content of the first control, the method further includes:
The second drag unit determines, based on a control type of the first control, that the first control supports a drag function.

According to an eighth aspect, this application further provides a control content drag method. The method includes: A second electronic device projects a first window and a second window onto a first electronic device. A drag unit of the second electronic device receives a touch and hold event that is sent by the first electronic device. The touch and hold event includes coordinates of a touch and hold operation on the first window that is displayed on the first electronic device. The drag unit does not belong to an application to which the first window belongs or an application to which the second window belongs. The first window and the second window belong to a same application or different applications. The second electronic device determines a first control in the first window based on the coordinates of the touch and hold operation, and obtains content of the first control. The drag unit receives a drag end event that is sent by the first electronic device. The drag end event includes a location of a drag end operation of a drag operation. The drag operation is used to drag the content of the first control from the first window to the second window, and a drag start operation of the drag operation is the touch and hold operation. The drag unit transfers the content of the first control to the second window based on the location of the drag end operation.

According to the foregoing technical solution, the control content can be dragged between the two projection windows in a projection scenario. The application does not need to be adapted to a drag function, and a system can trigger the drag function of the control content, to drag out and drag in the control content. This can reduce an application adaptation workload.

In a possible design, the drag unit belongs to an operating system of the second electronic device. In a possible design, the drag unit belongs to a framework layer of the operating system.

In a possible design, before the second electronic device obtains the content of the first control, the method further includes:
The drag unit determines, based on a control type of the first control, that the first control supports the drag function.

In a possible design, that the drag unit transfers the content of the first control to the second window based on the coordinates of the drag end operation includes:
The drag unit determines a first input control in the second window based on the location of the drag end operation. The drag unit uses the content of the first control as input content of the first input control.

In a possible design, that the drag unit determines a first input control in the second window based on the location of the drag end operation includes:
The drag unit determines, based on the location of the drag end operation, that a window on which the drag end operation is performed is the second window. The drag unit uses a control in an input state in the second window as the first input control, or uses a control that is closest to the location of the drag end operation in the second window as the first input control.

According to a ninth aspect, this application provides a control content drag system. The system includes a first electronic device and a second electronic device. The first electronic device is configured to display a first window and a second window. The first window is an application window of the first electronic device, and the second window is an application window that is projected by the second electronic device onto the first electronic device. The first electronic device is further configured to send a drag end event to the second electronic device when detecting a drag end operation of a drag operation. The drag end event includes a location of the drag end operation and content of a first control. The drag operation is used to drag the content of the first control in the first window from the first window to the second window. A second drag unit of the second electronic device is configured to receive the drag end event sent by the first electronic device. The second drag unit does not belong to an application to which the second window belongs. The second drag unit is further configured to transfer the content of the first control to the second window based on the location of the drag end operation.

According to a tenth aspect, this application provides a control content drag system. The system includes a first electronic device and a second electronic device. The first electronic device is configured to display a first window and a second window. The first window is an application window that is projected by the second electronic device onto the first electronic device, and the second window is an application window of the first electronic device. The first electronic device is further configured to send a touch and hold event to the second electronic device when detecting a touch and hold operation on the first window. The touch and hold event includes coordinates of the touch and hold operation. A second drag unit of the second electronic device is configured to: receive the touch and hold event, determine a first control in the first window based on the coordinates of the touch and hold operation, and obtain content of the first control. The second drag unit does not belong to an application to which the first window belongs. The second drag unit is configured to send the content of the first control to the first electronic device. The first electronic device is configured to transfer the content of the first control to the second window when detecting a drag end operation of a drag operation. The drag operation is used to drag the content of the first control from the first window to the second window.

According to an eleventh aspect, this application provides an electronic device. The electronic device includes a display, one or more processors, one or more memories, one or more sensors, a plurality of applications, and one or more computer programs. The one or more computer programs are stored in the one or more memories, and the one or more computer programs include instructions. When the instructions are invoked and executed by the one or more processors, the electronic device is enabled to perform the method according to any possible design in the first aspect, the third aspect, the fourth aspect, the sixth aspect, the seventh aspect, and the eighth aspect. It should be noted that the electronic device may be a first electronic device or a second electronic device.

According to a twelfth aspect, this application further provides an electronic device. The electronic device includes modules/units that are configured to perform the method according to any one of the first aspect, the third aspect, the fourth aspect, the sixth aspect, the seventh aspect, and the eighth aspect or the possible designs of the first aspect, the third aspect, the fourth aspect, the sixth aspect, the seventh aspect, and the eighth aspect. These modules/units may be implemented by hardware, or may be implemented by hardware by executing corresponding software. According to a thirteenth aspect, this application further provides a computer-readable storage medium. The computer-readable storage medium stores instructions. When the instructions are run on an electronic device, the electronic device is enabled to perform the method according to any one of the first aspect, the third aspect, the fourth aspect, the sixth aspect, the seventh aspect, and the eighth aspect and the possible designs of the first aspect, the third aspect, the fourth aspect, the sixth aspect, the seventh aspect, and the eighth aspect.

According to a fourteenth aspect, this application further provides a computer program product. When the computer program product runs on an electronic device, the electronic device is enabled to perform the method in any one of the first aspect, the third aspect, the fourth aspect, the sixth aspect, the seventh aspect, and the eighth aspect of embodiments of this application and the possible designs of the first aspect, the third aspect, the fourth aspect, the sixth aspect, the seventh aspect, and the eighth aspect.

For each of the second aspect to the fourteenth aspect and technical effect that may be achieved by each aspect, refer to the description of technical effect that may be achieved by each possible solution in the first aspect. Details are not described herein.

### BRIEF DESCRIPTION OF DRAWINGS

FIG. 1 is a schematic diagram of a structure of an electronic device according to an embodiment of this application;
FIG. 2A is a schematic diagram of a software architecture according to an embodiment of this application;
FIG. 2B is a schematic diagram of another software architecture according to an embodiment of this application;
FIG. 3 is a schematic diagram of an application scenario according to an embodiment of this application;
FIG. 4A is a flowchart of a control content drag method according to an embodiment of this application;
FIG. 4B is a flowchart of a control content drag-out method according to an embodiment of this application;
FIG. 4C is a schematic interaction diagram of a control content drag-out method according to an embodiment of this application;
FIG. 5A is a schematic diagram of a control content receiving method according to an embodiment of this application;
FIG. 5B is an interaction flowchart of a control content drag-in process according to an embodiment of this application;
FIG. 6A is a schematic diagram of a user interface according to an embodiment of this application;
FIG. 6B is a schematic diagram of a user interface according to an embodiment of this application;
FIG. 6C is a schematic diagram of a user interface according to an embodiment of this application;
FIG. 7 is a schematic diagram of a user interface according to an embodiment of this application;
FIG. 8A is a flowchart of a control content drag method that is applied to a multi-device scenario according to an embodiment of this application;
FIG. 8B is an interaction flowchart of a control content receiving method according to an embodiment of this application;
FIG. 9 is a schematic diagram of a user interface according to an embodiment of this application;
FIG. 10A is a flowchart of a control content drag method according to an embodiment of this application;
FIG. 10B is a flowchart of a control content drag-out method according to an embodiment of this application;
FIG. 11 is a flowchart of a control content drag method according to an embodiment of this application; and
FIG. 12 is a schematic diagram of a structure of another electronic device according to an embodiment of this application.

### DESCRIPTION OF EMBODIMENTS

The following describes technical solutions in embodiments of this application in detail with reference to the accompanying drawings in embodiments of this application.

An application (briefly referred to as an app) in embodiments of this application is a software program that can implement one or more specific functions. Usually, a plurality of applications may be installed in an electronic device, such as a camera application, a messages application, a mailbox application, a video application, a music application, and WeLink. The following application may be an application installed before the electronic device is delivered from a factory, or may be an application downloaded from a network or obtained from another electronic device by a user in a process of using the electronic device.

It should be noted that control content drag methods provided in embodiments of this application are applicable to any electronic device with a display, like a mobile phone, a tablet computer, a wearable device (for example, a watch, a wristband, a smart helmet, or smart glasses), a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). This is not limited in embodiments of this application. In addition, an example embodiment of the electronic device includes but is not limited to an electronic device running iOS^{®}, Android^{®}, Microsoft^{®}, HarmonyOS^{®}, or another operating system.

It should be understood that the control content drag method provided in this embodiment of this application is applicable to a single electronic device, or is applicable to a plurality of electronic devices, for example, a multi-screen collaboration scenario. For example, the control content drag method may be applied to drag a control between different windows on the mobile phone, or may be applied to drag a control between a projection window and a local window in the notebook computer after the mobile phone is projected onto the notebook computer. Different windows on the mobile phone may correspond to different applications, or may be different windows of a same application.

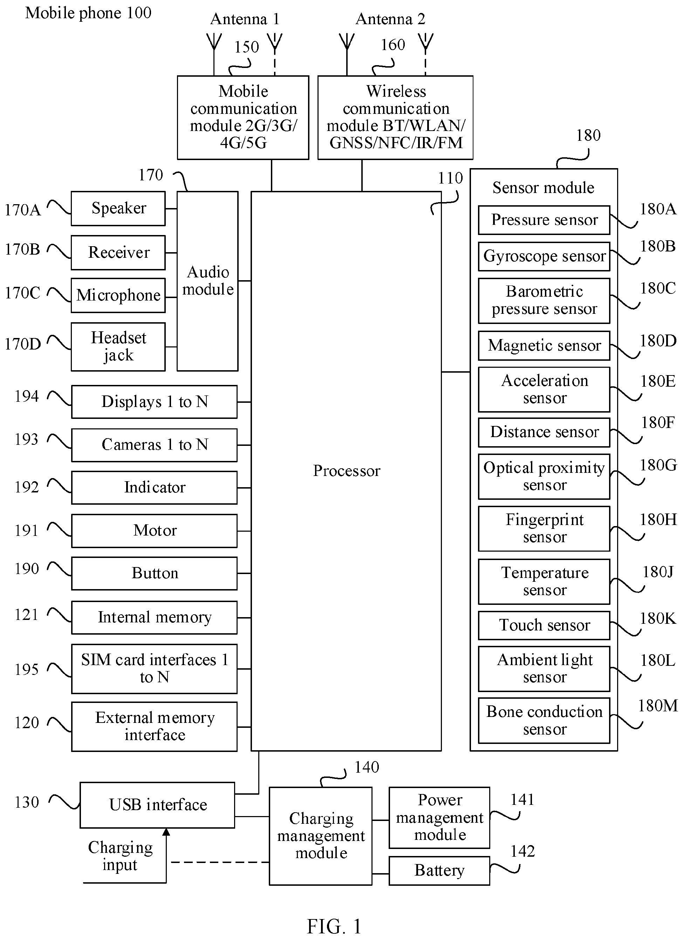

The following uses the mobile phone as an example to describe a structure of the electronic device. As shown in FIG. 1, a mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the mobile phone 100. The controller may generate an operation control signal based on instruction operation code and a time sequence signal, to complete control of instruction fetching and instruction execution. The processor 110 may be further provided with a memory for storing instructions and data. In some embodiments, the memory in the processor 110 is a cache memory. The memory may store instructions or data just used or cyclically used by the processor 110. If the processor 110 needs to use the instructions or data again, the processor may directly invoke the instructions or data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 100, or may be configured to transfer data between the mobile phone 100 and a peripheral device. The charging management module 140 is configured to receive a charging input from the charger. The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the mobile phone 100 may be configured to cover one or more communication frequency bands. Different antennas may be reused to improve antenna utilization. For example, the antenna 1 may be reused as a diversity antenna in a wireless local area network. In some other embodiments, the antenna may be used in combination with a tuning switch.

The mobile communication module 150 can provide a wireless communication solution applied to the mobile phone 100, including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing like filtering, or amplification on the received electromagnetic wave, and then transmit the electromagnetic wave to the modem processor for demodulation. The mobile communication module 150 may further amplify a signal that is modulated by the modem processor, and convert the signal into an electromagnetic wave for radiation by using the antenna 1. In some embodiments, at least some functional modules of the mobile communication module 150 may be disposed in the processor 110. In some embodiments, the at least some functional modules of the mobile communication module 150 and at least some modules of the processor 110 may be disposed in a same device.

The wireless communication module 160 may provide a solution, applied to the mobile phone 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, and perform frequency modulation and amplification on the signal, and convert the signal into an electromagnetic wave for radiation by using the antenna 2.

In some embodiments, in the mobile phone 100, the antenna 1 and the mobile communication module 150 are coupled, and the antenna 2 and the wireless communication module 160 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a 5th generation (5th generation, 5G) mobile communication system, a future communication system, like a 6th generation (6th generation, 6G) system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display an interface of an application, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone 100 may include one or N displays 194, and N is a positive integer greater than 1. In this embodiment of this application, the display 194 may be configured to simultaneously display a plurality of application interfaces.

The camera 193 is configured to capture a static image or a video. The camera 193 may include a front-facing camera and a rear-facing camera.

The internal memory 121 may be configured to store computer-executable program code. The executable program code includes instructions. The processor 110 runs the instructions stored in the internal memory 121, to perform various function applications and data processing of the mobile phone 100. The internal memory 121 may include a program storage area and a data storage area. The program storage area may store an operating system, software code of at least one application (for example, an iQIYI application or a WeChat application), and the like. The data storage area may store data (for example, an image or a video) or the like generated in a process of using the mobile phone 100. In addition, the internal memory 121 may include a high-speed random access memory, and may further include a non-volatile memory, for example, at least one magnetic disk storage device, a flash storage device, or a universal flash storage (universal flash storage, UFS).

The external memory interface 120 may be configured to connect to an external storage card, for example, a micro SD card, to extend a storage capability of the mobile phone 100. The external storage card communicates with the processor 110 through the external memory interface 120, to implement a data storage function. For example, a file like an image, a video is stored in the external storage card.

The mobile phone 100 may implement an audio function, for example, music playing and recording, by using the audio module 170, the speaker 170A, the receiver 170B, the microphone 170C, the headset jack 170D, the application processor, and the like.

The pressure sensor 180A is configured to sense a pressure signal, and convert the pressure signal into an electrical signal. In some embodiments, the pressure sensor 180A may be disposed on the display 194. The gyroscope sensor 180B may be configured to determine a motion attitude of the mobile phone 100. In some embodiments, an angular velocity of the mobile phone 100 around three axes (namely, x, y, and z axes) may be determined by using the gyroscope sensor 180B. The gyroscope sensor 180B may be configured to determine a motion attitude of the mobile phone 100. In some embodiments, the angular velocity of the mobile phone 100 around three axes (namely, x, y, and z axes) may be determined by using the gyroscope sensor 180B. The gyroscope sensor 180B may be configured to implement image stabilization during shooting. For example, when a shutter is pressed, the gyroscope sensor 180B detects an angle at which the mobile phone 100 shakes, calculates, based on the angle, a distance for which a lens module needs to compensate, and allows a lens to cancel the shake of the mobile phone 100 through reverse motion, to implement image stabilization. The gyroscope sensor 180B may be further used in a navigation scenario and a somatic game scenario.

The barometric pressure sensor 180C is configured to measure barometric pressure. In some embodiments, the mobile phone 100 calculates an altitude by using a barometric pressure value measured by the barometric pressure sensor 180C, to assist in positioning and navigation. The magnetic sensor 180D includes a Hall sensor. The mobile phone 100 may detect opening or closing of a cover leather case by using the magnetic sensor 180D. In some embodiments, when the mobile phone 100 is a flip phone, the mobile phone 100 may detect opening and closing of a cover based on the magnetic sensor 180D. Further, a feature, like automatic unlocking when the cover is flipped open, is set based on a detected opening or closing state of the leather case or a detected opening or closing state of the cover. The acceleration sensor 180E may detect magnitudes of acceleration in various directions (usually on three axes) of the mobile phone 100. When the mobile phone 100 is still, a magnitude and a direction of gravity may be detected. The acceleration sensor 180E may be further configured to identify an attitude of the electronic device, and is used in an application such as switching between a landscape mode and a portrait mode or a pedometer.

The distance sensor 180F is configured to measure a distance. The mobile phone 100 may measure the distance in an infrared manner or a laser manner. In some embodiments, in a shooting scenario, the mobile phone 100 may use the distance sensor 180F to measure a distance to implement fast focusing. The optical proximity sensor 180G may include, for example, a light-emitting diode (LED) and an optical detector, for example, a photodiode. The light-emitting diode may be an infrared light-emitting diode. The mobile phone 100 emits infrared light by using the light-emitting diode. The mobile phone 100 detects infrared reflected light from a nearby object by using the photodiode. When detecting sufficient reflected light, the mobile phone 100 may determine that there is an object near the mobile phone 100. When detecting insufficient reflected light, the mobile phone 100 may determine that there is no object near the mobile phone 100. The mobile phone 100 may detect, by using the optical proximity sensor 180G, that a user holds the mobile phone 100 close to an ear for a call, and automatically turn off a display for power saving. The optical proximity sensor 180G may also be used in a leather case mode or a pocket mode to automatically unlock or lock a screen.

The ambient light sensor 180L is configured to sense ambient light brightness. The mobile phone 100 may adaptively adjust brightness of the display 194 based on the sensed ambient light brightness. The ambient light sensor 180L may also be configured to automatically adjust white balance during shooting. The ambient light sensor 180L may further cooperate with the optical proximity sensor 180G to detect whether the mobile phone 100 is in a pocket, to prevent an accidental touch. The fingerprint sensor 180H is configured to collect a fingerprint. The mobile phone 100 may use a feature of the collected fingerprint to implement fingerprint-based unlocking, application lock access, fingerprint-based shooting, fingerprint-based call answering, and the like. The temperature sensor 180J is configured to detect a temperature. In some embodiments, the mobile phone 100 enforces a temperature processing policy by using the temperature detected by the temperature sensor 180J. For example, when the temperature reported by the temperature sensor 180J exceeds a threshold, the mobile phone 100 lowers performance of a processor near the temperature sensor 180J, to reduce power consumption for thermal protection. In some other embodiments, when the temperature is less than another threshold, the mobile phone 100 heats the battery 142, to avoid abnormal shutdown of the mobile phone 100 caused by a low temperature. In some other embodiments, when the temperature is less than still another threshold, the mobile phone 100 boosts an output voltage of the battery 142, to avoid abnormal shutdown caused by a low temperature.

The touch sensor 180K is also referred to as a "touch panel". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 194. In some other embodiments, the touch sensor 180K may alternatively be disposed on a surface of the mobile phone 100, and is at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may be further in contact with a human pulse and receive a blood pressure beating signal.

The button 190 includes a power button, a volume button, and the like. The button 190 may be a mechanical button, or may be a touch button. The mobile phone 100 may receive a button input, and generate a button signal input related to a user setting and function control of the mobile phone 100. The motor 191 may generate a vibration prompt. The motor 191 may be configured to provide an incoming call vibration prompt or a touch vibration feedback. For example, touch operations performed on different applications (for example, shooting and audio play) may correspond to different vibration feedback effect. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the mobile phone 100.

It may be understood that the components shown in FIG. 1 do not constitute a specific limitation on the mobile phone. The mobile phone may further include more or fewer components than those shown in the figure, or some components may be combined, or some components may be split, or there may be a different component layout. The following embodiment uses the mobile phone 100 shown in FIG. 1 as an example for description.

A software system of the mobile phone 100 may use a layered architecture, including an event-driven architecture, a microkernel architecture, a microservice architecture, or a cloud architecture. In this embodiment of this application, an Android system with the layered architecture is used as an example to describe a software structure of the mobile phone 100. It should be understood that the system in this embodiment of this application may alternatively be a HarmonyOS system. This is not limited in this application.

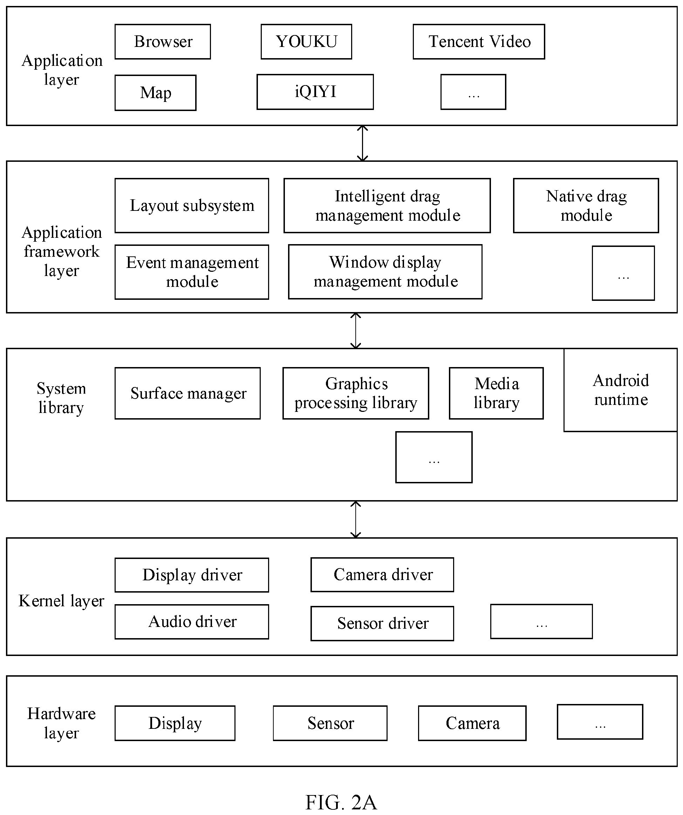

The following describes the software structure of the electronic device with reference to different scenarios. The following first describes the software structure in a single-device scenario. FIG. 2A is a block diagram of a software structure of a mobile phone 100 according to an embodiment of this application. In a layered architecture, software is divided into several layers, and each layer has a clear role and task. The layers communicate with each other through a software interface. In some embodiments, an Android system includes an application layer, an application framework layer, an Android runtime (Android runtime), a system library, a kernel layer, and a hardware layer from top to bottom.

The application layer may include a series of application packages. As shown in FIG. 2A, an application like Browser, YOUKU, Tencent Video, Map, or iQIYI may be installed at the application layer.

The application framework layer provides an application programming interface (application programming interface, API) and a programming framework for the application at the application layer. The application framework layer includes some predefined functions.

As shown in FIG. 2A, the application framework layer may include a layout subsystem module, an intelligent drag management module, a native drag module, an event management module, and a window display management module. Certainly, the application framework layer may further include a display policy service, a display manager service (display manager service, DMS), a window manager, a content provider, a view system, a resource manager, a notification manager, and the like.

The layout subsystem module is responsible for work related to system layout, and may accurately find a corresponding layout control based on a coordinate point that is touched and held by a user on a display. In addition, the layout subsystem module can find a currently displayed control with a specified type from an interface, for example, an edit box.

The intelligent drag management module is a newly added module in this application, and is responsible for service management related to system-level drag, for example, a specific time point of triggering a system-level drag-out event and a specific time point of triggering a system-level drag-in event.

The native drag module is responsible for an overall drag process, for example, dragging to display an interaction icon and a process animation.

The window display management module is responsible for managing system window display, mainly including a window display size, display status, display level, and focus management. The event management module is responsible for managing and distributing an input event in the system.

The Android runtime includes a core library and a virtual machine. The Android runtime is a runtime environment in the Android operating system and is responsible for scheduling and managing the Android operating system.

The core library includes two parts: a function that needs to be called in a Java language, and the core library of the Android operating system.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording of audios and videos in a plurality of formats, and opening of static images in a plurality of formats. The media library may support a plurality of audio and video coding formats, for example, MPEG-4, H.264, MP3, AAC, AMR, JPG, and PNG.

The graphics processing library is configured to implement three-dimensional graphics drawing, image rendering, compositing, layer processing, and the like. The 2D graphics engine is a drawing engine for 2D drawing.

The kernel layer is a layer between hardware and software of an electronic device. The kernel layer includes at least a display driver, a sensor driver, a camera driver, an audio driver, and the like, and is configured to drive hardware at the hardware layer.

The hardware layer may include various sensors (such as a touch sensor), a display, a camera, and the like.

In this embodiment of this application, the mobile phone 100 may display two windows such as a window 1 and a window 2. The window 1 includes a plurality of controls such as a control 1 and a control 2. When the user touches and holds the control 1 in the window 1, the intelligent drag management module may find a control type based on location coordinates of the touch and hold control performed by the user. For example, the intelligent drag management module may invoke an interface of the layout subsystem to find that the control is the control 1, and then determine whether the control 1 supports a drag function. If the control 1 supports the drag function, content of the control 1 is extracted, and the extracted content is processed. Then, the intelligent drag management module may invoke a startDragAndDrop() interface of the control object to start a drag-out process. The native drag module may enable the drag function to execute drag animation. It is assumed that the user drags the control 1 from the window 1 to the window 2. When the drag event occurs on a receiving window, namely the window 2, the user may release the control 1. In this case, the system may obtain data in the drag event, find an edit box closest to coordinates of the release event, and write the data in the drag event, namely, the content of the control 1, to the edit box, to drag the control 1 from the window 1 to the window 2.

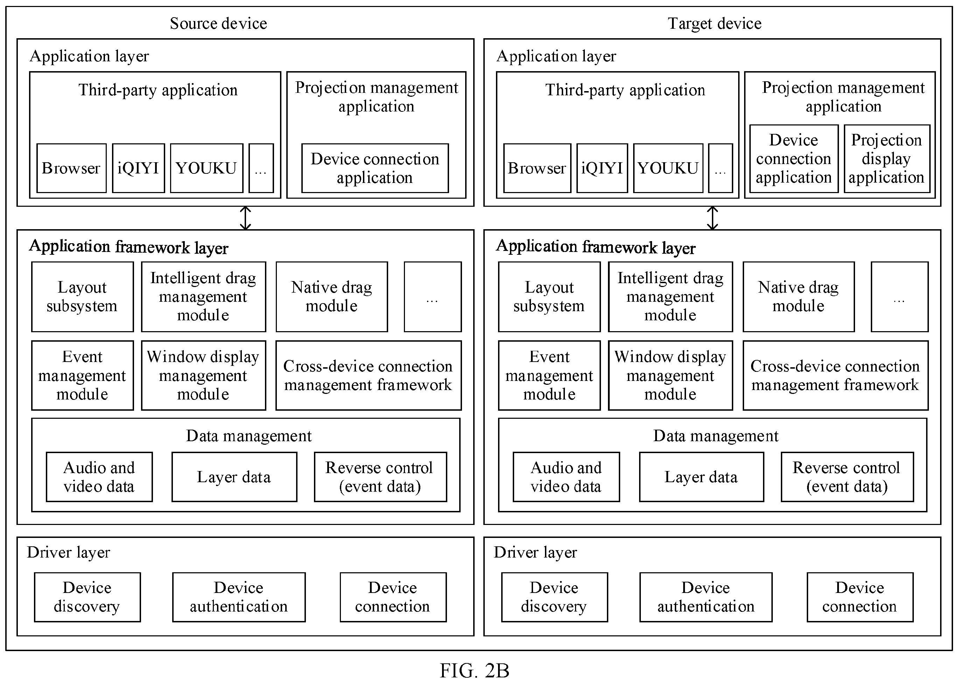

FIG. 2B is a schematic diagram of a software architecture in a multi-device collaboration scenario according to an embodiment of this application. As shown in FIG. 2B, the architecture may include an application layer, an application framework layer, and a driver layer. An application layer on a source device side may include a third-party application and an application that is related to projection management, for example, a device connection application. The application framework layer may include a layout subsystem, an intelligent drag management module, a native drag management module, a window display management module, an event management module, a cross-device connection management framework, and a data management layer. The driver layer includes a device discovery module, a device authentication module, and a device connection module.

An application layer on a target device side may include a third-party application and an application that is related to projection management, for example, a device connection application, and a projection display application. The application framework layer may include a cross-device connection management framework, a basic framework (for example, event management, window display, and window management (DisplayManager)), and a data management layer. The driver layer includes a device discovery module, a device authentication module, and a device connection module.

The device connection application is used to manage a connection status between devices and a related service. The projection display application is used to display content of a projection window. The data management layer is responsible for data management in a cross-device scenario, and transmits layer data, audio and video data of the source device to the target device. The target device transmits a reverse control event back to the source device to complete an event process. The driver layer provides capabilities such as device discovery, device authentication, and device connection. It should be understood that, functions of the intelligent drag management module, the native drag module, the window display management module, and the event management module may be implemented with reference to the description in FIG. 2A. Details are not described herein. In some embodiments, when an electronic device 1 is projected onto an electronic device 2 for display, the electronic device 2 may display a local window (for example, denoted as a local window 1) and a projection window (for example, denoted as a projection window 2). It is assumed that a user drags a control 1 in the local window 1 to the projection window 2. A specific drag process is the same as the drag process in the single-device scenario. For details, refer to the specific description in FIG. 2A. Details are not described herein.

In some other embodiments, when the electronic device 2 displays the local window 1 and the projection window 2, assuming that the user drags the control 1 in the projection window 2 to the local window 1, the user may trigger a touch and hold event on the electronic device 2, and the electronic device 2 may perform coordinate system conversion between the source device and the target device, and send the touch and hold event and converted location coordinates of the control 1 to the electronic device 1. Correspondingly, after receiving the touch and hold event, the event management module of the electronic device 1 may notify the intelligent drag management module of the event. The intelligent drag management module sends the location coordinates of the control 1 to the layout subsystem. The layout subsystem finds a control identifier based on the location coordinates of the control 1, and notifies the intelligent drag management module of the found control identifier. Then, the intelligent drag management module of the electronic device 1 determines whether the control corresponding to the control identifier supports a drag function. If the control supports the drag function, the intelligent drag management module obtains content of the control 1. Then, the intelligent drag management module of the electronic device 1 may send the content of the control 1 to the electronic device 2. The electronic device 2 may invoke a startDragAndDrop() interface of the control object to start a drag-out process, and the native drag module may enable the drag function to execute drag animation. Because the receiving window is the local window in the electronic device 2, the control receiving process is the same as the receiving process in the single-device scenario. For details, refer to the specific description in FIG. 2A. Details are not described herein.

The following embodiment uses the architecture of the mobile phone 100 shown in FIG. 1 as an example for description.

In addition, in the following embodiment, at least one includes one or more, and a plurality of means two or more. In addition, it should be understood that in the descriptions of this application, the terms such as "first" and "second" are merely used for the purpose of distinguishable descriptions.

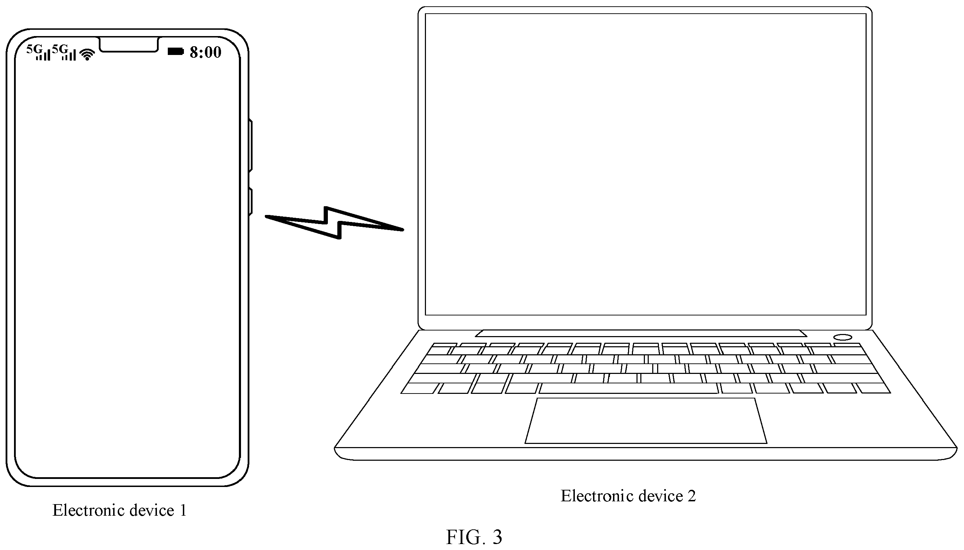

An embodiment of this application is applied to a multi-device scenario. FIG. 3 is a schematic diagram of an application scenario according to an embodiment of this application. As shown in FIG. 3, in this scenario, an electronic device 1 may be interconnected to a plurality of other electronic devices (for example, an electronic device 2) based on a communication network. Then, the electronic device 1 may project content of a display of the electronic device 1 onto the electronic device 2 for display, or the electronic device 2 may project content of a display of the electronic device 2 onto the electronic device 1 for display. For example, the communication network may be a local area network, for example, may be a Wi-Fi hotspot network, a wireless fidelity peer-to-peer (wireless fidelity-peer to peer, Wi-Fi P2P) network, a Bluetooth network, a ZigBee network, or an NFC network. In a possible implementation, a wireless connection may be established between the plurality of electronic devices based on a mobile network. For example, the mobile network includes a mobile network that is established based on 2G, 3G, 4G, 5G, and a subsequent standard protocol. In a possible implementation, the plurality of electronic devices may further establish a connection to at least one server by using the mobile network. Data, and/or a message, and/or information, and/or signaling, and/or instructions are transmitted between the devices by using the server. In a possible implementation, the plurality of electronic devices may alternatively be connected by using a data cable.

It should be noted that the multi-device application scenario in this embodiment of this application is applicable to a same-source projection scenario, or is applicable to a different-source projection scenario. This is not specifically limited herein.

The following describes different drag scenarios for a single device and a plurality of devices. For ease of description, in an embodiment of this application, devices in a multi-device scenario may be respectively referred to as a "source device" (or referred to as a second electronic device) and a "target device" (or referred to as a first electronic device).

The following first describes a single-device drag scenario.

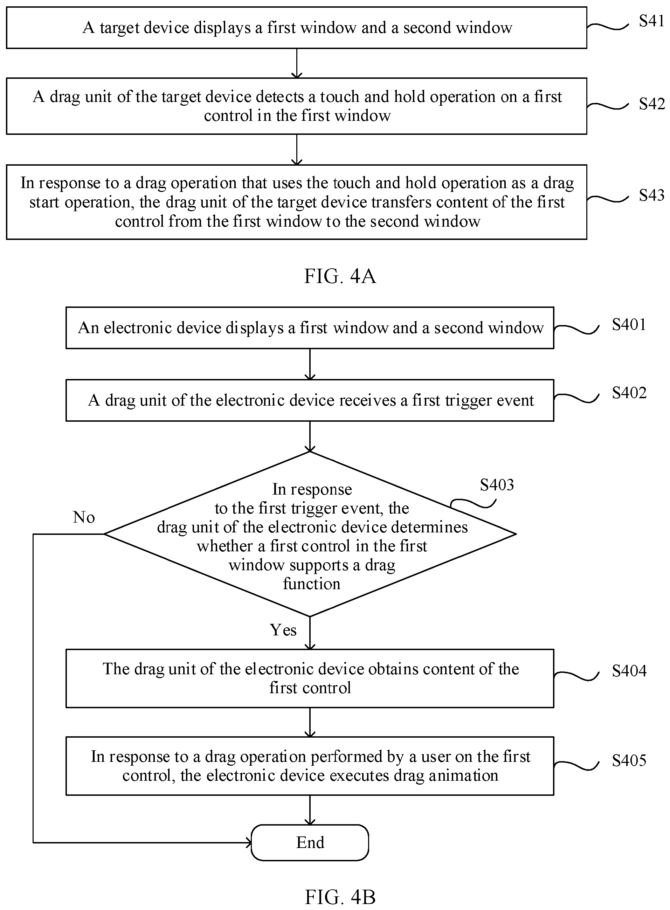

FIG. 4A is a flowchart of a control content drag method according to an embodiment of this application. As shown in FIG. 4A, the method may include the following steps.

S41: A target device displays a first window and a second window.

For a single device, the electronic device may display at least one window. For ease of description, the two windows displayed on a display of the single device may be denoted as the "first window" and the "second window". The first window and the second window may be different windows of a same application, or may be windows of different applications. This is not limited in this application. Certainly, the display may display more windows. This is not specifically limited in this application.

S42: A drag unit of the target device detects a touch and hold operation on a first control in the first window.

The drag unit of the target device does not belong to an application to which the first window belongs or an application to which the second window belongs. In a specific implementation, the drag unit of the electronic device may belong to an operating system of the electronic device. For example, the drag unit may belong to a framework layer of the operating system. Certainly, the drag unit may alternatively be a system application. This is not limited in this application.

S43: In response to a drag operation that uses the touch and hold operation as a drag start operation, the drag unit of the target device transfers content of the first control from the first window to the second window.

The drag operation is used to drag the content of the first control from the first window to the second window.

The following separately describes a control content drag-out process and a control content drag-in process in the embodiment shown in FIG. 4A.

FIG. 4B is a flowchart of a control content drag-out method according to an embodiment of this application. As shown in FIG. 4B, the method may include the following steps.

It should be understood that the electronic device in the embodiment shown in FIG. 4B is equivalent to the target device in the embodiment shown in FIG. 4A.

S401: The electronic device displays the first window and the second window.

S402: The drag unit of the electronic device receives a first trigger event.

The first trigger event may be a touch and hold event performed by a user on a specific control in any window. For example, the first trigger event may be a touch and hold event performed by the user on an image. The first trigger event (or the touch and hold event) may include coordinates of the touch and hold control.

S403: In response to the first trigger event, the drag unit of the electronic device determines whether the first control in the first window supports a drag function. If the first control supports the drag function, S404 continues to be performed. If the first control does not support the drag function, the procedure ends, and the following steps are not performed.

It should be noted that, that the control supports the drag function may be understood as that the drag unit of the electronic device may obtain control content. In this case, the control content may be transferred to another window by using the drag unit.

For ease of description, a control to be dragged by the user may be denoted as the "first control" below. It should be understood that the first control may be an image control, a text control, an edit box control, or the like. This is not limited in this application.

In this embodiment of this application, when detecting the first trigger event, the drag unit of the electronic device may invoke a layout subsystem module based on coordinates of the touch and hold operation performed by the user, to find the control corresponding to the coordinates, and then determine whether the control supports the drag function. It should be understood that the system may store the control coordinates in the window. For example, for the control coordinates in the application windows, refer to Table 1 below.

**Table 1**

| Window | Control | Control type | Coordinates |
|---|---|---|---|
| Window 1 | Control 1 | Type A | (X1, Y1) |
| Window 1 | Control 2 | Type B | (X2, Y2) |
| Window 2 | Control 3 | Type A | (X3, Y3) |
| Window 2 | Control 4 | Type B | (X4, Y4) |
| Window 2 | Control 5 | Type C | (X5, Y5) |

It should be understood that there may be controls with a same type in different windows. For example, the control 1 in the window 1 and the control 3 in the window 2 may be the controls with the same type (for example, the type A). Table 1 is only an example for description, and this is not limited in this application.

In some embodiments, an application may configure whether the control supports the drag function. For example, the application may set a flag for the control in the window. For example, a control whose flag is 1 may be set as the control that supports the drag function, and a control whose flag is 2 may be set as a control that does not support the drag function.

In some other embodiments, the system may configure whether the control supports the drag function. For example, the system may configure an image control to support the drag function, and configure a textbox control not to support the drag function. It should be noted that, for a same control, the system and the application may have same or different configurations on whether the drag function is supported. For example, the application configures the image control to support the drag function, and the system configures the image control not to support the drag function. This is not limited in this application.

In a possible implementation, for a same control, if the system and the application have the different configurations on whether the drag function is supported, the application configuration may be used. For example, if the application configures the image control to support the drag function, and the system configures the image control not to support the drag function, it may be determined that the image control is a control that supports the drag function.

It should be understood that the application or the system may configure all controls to support the drag function, or certainly may configure some controls to support the drag function. For example, the system may store a trustlist and/or a blocklist. The trustlist may include a control type that supports the drag function, and the blocklist may include a control type that does not support the drag function.

It should be noted that priorities of the foregoing two different configuration manners are not limited in this embodiment of this application. Whether to select the application configuration or the system configuration may be specifically determined based on a product policy. For example, the image control configured by the application supports the drag function, and the image control configured by the system does not support the drag function. However, the product policy requires selection of the application configuration. In this case, a priority of the application is higher than that of the system.

S404: The drag unit of the electronic device obtains the content of the first control.

In this embodiment of this application, the drag unit of the electronic device may obtain the content of the dragged first control. For example, when the first control is an image, content of the image and a screenshot of the image may be obtained.

The following describes several control content extraction manners of different control types. FIG. 2 shows the control content obtaining manners of the several control types provided in this embodiment of this application.

**Table 2**

| Control type | Control content extraction |
|---|---|
| ImageView (an image control) | Extract control content and convert the content to a storage format (for example, PNG format or JPG format) |
| TextView (a text control) | Extract all text content |
| EditText (an edit box control) | Extract text content selected by a user in the control/extract all text content in the control |

It should be understood that Table 2 is merely an example for description. An extraction manner of control content of another control type is not specifically limited in this application. For the image control, after the control content is extracted, format conversion needs to be performed on the extracted content, to subsequently display an image that is obtained through format conversion in a target window. For example, when the first control is an image, a mobile phone may extract corresponding content of the image and a snapshot of the image. In addition, format conversion may be performed on the extracted content and the snapshot of the image, for example, may be converted into the JPG format. Certainly, the extracted content and the snapshot of the image may be alternatively converted into another format. This is not limited in this application.

S405: In response to the drag operation performed by the user on the first control, the electronic device executes drag animation.

In this embodiment of this application, if the first control supports the drag function, the user may perform the drag operation on the content of the first control, and the electronic device may detect a drag event. The drag event may include drag data, for example, may include control content (used to display in the target window), a snapshot (or referred to as a screenshot, used to implement drag animation), and coordinates of the snapshot.

In some embodiments, when the first control supports the drag function, the user may drag the content of the first control. In this case, the electronic device may invoke a startDragAndDrop() interface of the control object to trigger the drag function. In response to the drag operation performed by the user, a native drag module of the electronic device may execute drag animation. In a possible implementation, before the content of the first control is transferred from the first window to the second window, the drag unit of the electronic device may further determine whether the application to which the first window belongs starts an operation of transferring the content of the first control from the first window to the second window. If the application to which the first window belongs starts the operation of transferring the content of the first control from the first window to the second window, for example, the first control invokes the startDragAndDrop() interface, it indicates that the application to which the first window belongs is adapted to the drag function. In this case, a drag implementation step of the system is not performed. If the application to which the first window belongs does not start the operation of transferring the content of the first control from the first window to the second window, drag is performed according to the method in this embodiment of this application.

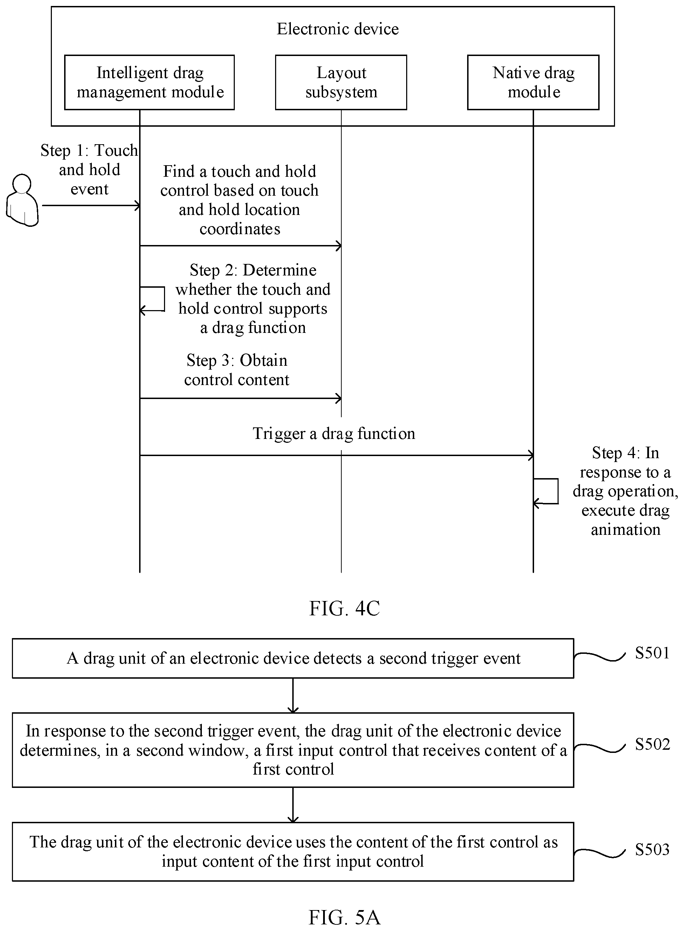

The foregoing drag-out process is described by using an example in which the drag unit is the intelligent drag module in the diagram of the software architecture shown in FIG. 2A. FIG. 4C is a schematic interaction diagram of a control content drag-out method according to an embodiment of this application. As shown in FIG. 4C, the method may include the following steps.

Step 1: The intelligent drag management module of the electronic device receives the touch and hold event performed by the user.

In this embodiment of this application, after the user triggers the touch and hold event on the electronic device, the intelligent drag management module may receive the touch and hold event performed by the user, and then may invoke the layout subsystem, to find the specific touch and hold control based on the touch and hold location coordinates of the user.

Step 2: The intelligent drag management module of the electronic device determines whether the touch and hold control performed by the user supports the drag function.

In some embodiments, the intelligent drag management module may determine, based on the control type, whether the control supports the drag function. If the control supports the drag function, step 3 continues to be performed.

Step 3: The intelligent drag management module of the electronic device obtains the control content.

Step 4: In response to the drag operation performed by the user, the native drag module of the electronic device executes drag animation.

It should be understood that for a specific implementation of the embodiment shown in FIG. 4C, refer to the description in FIG. 4B. Details are not described herein.

The following continues to describe a process of receiving control content by the window. For the single device, as shown in FIG. 5A, the following steps may be included.

S501: A drag unit of an electronic device detects a second trigger event.

The second trigger event herein may be an event that a user drags a first control from a first window to a second window and releases the first control in the second window. The second trigger event may include drag data and release location coordinates.

In some embodiments, in response to the drag operation performed by the user, a native drag module may execute a drag function, and execute drag animation. When the user drags the first control to the second window, the user may release the first control. In this case, the native drag module may detect the release event, and notify an intelligent drag management module of the release event.

S502: In response to the second trigger event, the drag unit of the electronic device determines, in the second window, a first input control that receives content of the first control.

In some embodiments, in response to the release event, the intelligent drag management module of the electronic device may invoke an interface of a window management module, and determine a specific release window of the user based on the release location coordinates of the user. Then, the intelligent drag management module may invoke an interface of a layout subsystem to find a corresponding input control in the receiving window (namely, the second window). For example, the input control may be an edit control. The edit control is a rectangular control window, which usually allows the user to enter and edit a text in a dialog box. A process of finding and determining the input control is described in detail below.

In a possible implementation, after detecting the second trigger event, the drag unit may determine whether the first input control listens to a drag end event. If the first input control listens to the drag end event, the method in this embodiment of this application is not performed. If the first input control does not listen to the drag end event, the method in this embodiment of this application is performed.

S503: The drag unit of the electronic device uses the content of the first control as input content of the first input control.

In this embodiment of this application, after finding the first input control in the second window, the drag unit of the electronic device may use the content of the first control as the input content of the first input control, to transfer the content of the first control from the first window to the second window.

In a possible implementation, after determining the first input control, the drag unit may display the content of the first control on the first input control. For example, the second window is a chat window, and the first input control is an edit control of the chat window. The content of the first control may be directly displayed on the edit control, and the content is sent to a communication counterpart after the user taps a "send" button. Certainly, the content of the first control may not be displayed on the edit control, but is directly sent to the communication counterpart as input content of the edit control.

The following uses an example in which the drag unit includes the intelligent drag module and the native drag module shown in FIG. 2A, to describe the foregoing control content drag-in process.

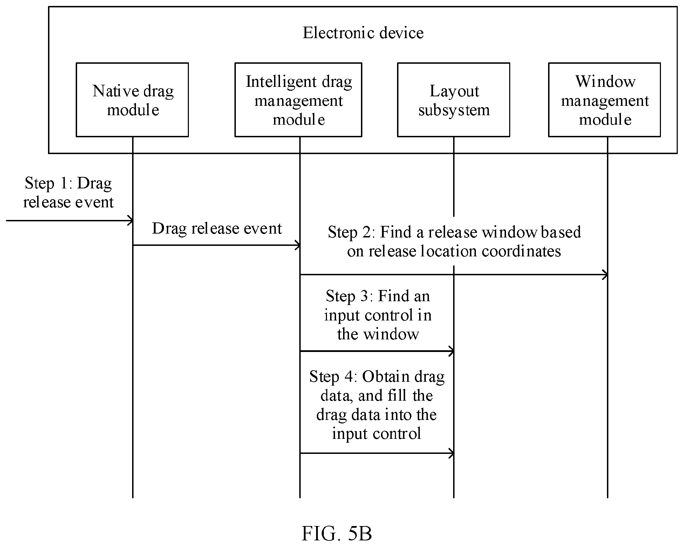

FIG. 5B is an interaction flowchart of a control content drag-in process according to an embodiment of this application. As shown in FIG. 5B, the method may include the following steps. Step 1: The native drag module of the electronic device receives a drag release event, and sends the drag release event to the intelligent drag management module.

Alternatively, the drag release event may be denoted as the drag end event, and a release operation may be denoted as a drag end operation.

Step 2: The intelligent drag management module of the electronic device invokes the window management module, to find the release window of the user based on the release location coordinates.

Step 3: The intelligent drag management module of the electronic device invokes the layout subsystem to find the input control in the window.

Step 4: The intelligent drag management module of the electronic device obtains the drag data, and invokes the layout subsystem to fill the drag data into the input control. The drag data includes the control content.

It should be understood that, for a specific implementation process of the steps in the embodiment shown in FIG. 5B, refer to the description in FIG. 5A. Details are not described herein.

In some embodiments of this application, the drag unit (namely, the intelligent drag management module in FIG. 5B) may use a control in an input state in the second window as the first input control, or use an input control that is closest to a location of the drag end operation in the second window as the first input control.

The following uses the edit box as an example to describe how to determine the input control. There may be a plurality of edit boxes in the second window. Therefore, for ease of description in this application, an edit box receiving the first control may be denoted as a "first edit box". In this embodiment of this application, the first edit box may be determined in the following manners. Manner 1: In some embodiments, the first edit box may be an edit box that is closest to the release location coordinates of the user in the second window. Specifically, the intelligent drag module of the electronic device may invoke the interface of the window management module, obtain the release window of the user based on the release location coordinates of the user, and then invoke the interface of the layout subsystem to traverse visible controls in the second window, to find a corresponding edit control.

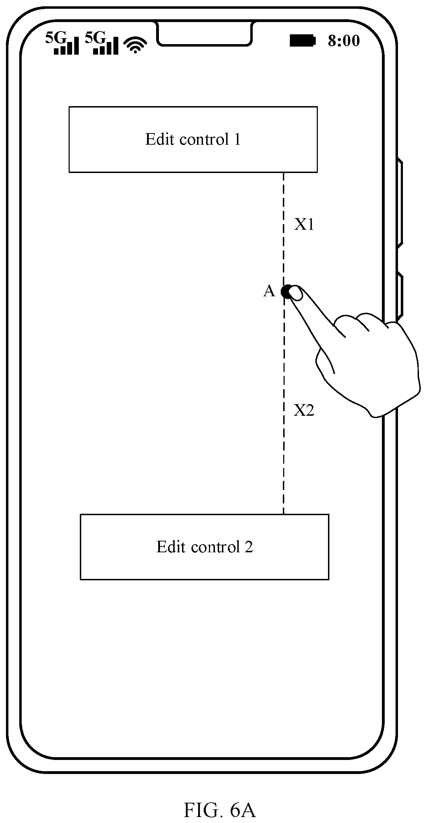

For example, as shown in FIG. 6A, it is assumed that there are a plurality of edit controls in the second window, for example, an edit control 1 and an edit control 2 shown in FIG. 6A. The release location of the user is a location A. The electronic device may separately calculate distances from the location A to the edit control 1 and the edit control 2. For example, the distance from the location A to the edit control 1 is X1, and the distance from a location B to the edit control 2 is X2. Then, an edit control closest to the location A is determined. For example, if the edit control 1 is closest to the location A (X2>X1), the first edit box is the edit control 1.

Manner 2: In some other embodiments, the first edit box may be an edit box in an input state in the second window.

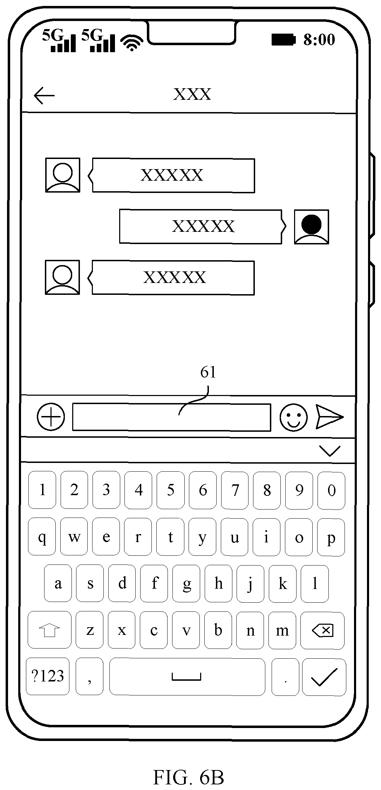

It should be understood that the edit box in the input state may be an edit box that is being edited currently, like an edit box of a chat interface, for example, may be a rectangular box in which the user is editing a message. For example, as shown in FIG. 6B, it is assumed that the second window is a window in which the chat interface shown in the figure is located. In this case, the user may enter to-be-sent message content in a rectangular box 61 by using a keyboard. The rectangular box 61 may be understood as the edit box in the input state. Therefore, the rectangular box 61 may be used as the first edit box.

It should be noted that there may be priorities of the manner 1 and the manner 2. For example, a priority of the manner 2 is higher than a priority of the manner 1. To be specific, the electronic device may first find the edit box in the input state as the first edit box, and if the edit box in the input state is not found, select the edit box closest to the release location as the first edit box. Manner 3: The first edit box is an edit box corresponding to the release location of the user.

In the examples of the manner 1 and the manner 2, the release location of the user is outside the edit box. In this embodiment of this application, in still another possible implementation, if a release location of the user is in the edit box, an edit box corresponding to the release location of the user may be used as the first edit box. For example, if the release location of the user is in the edit control 2 shown in FIG. 6A, the first edit box may be the edit control 2.

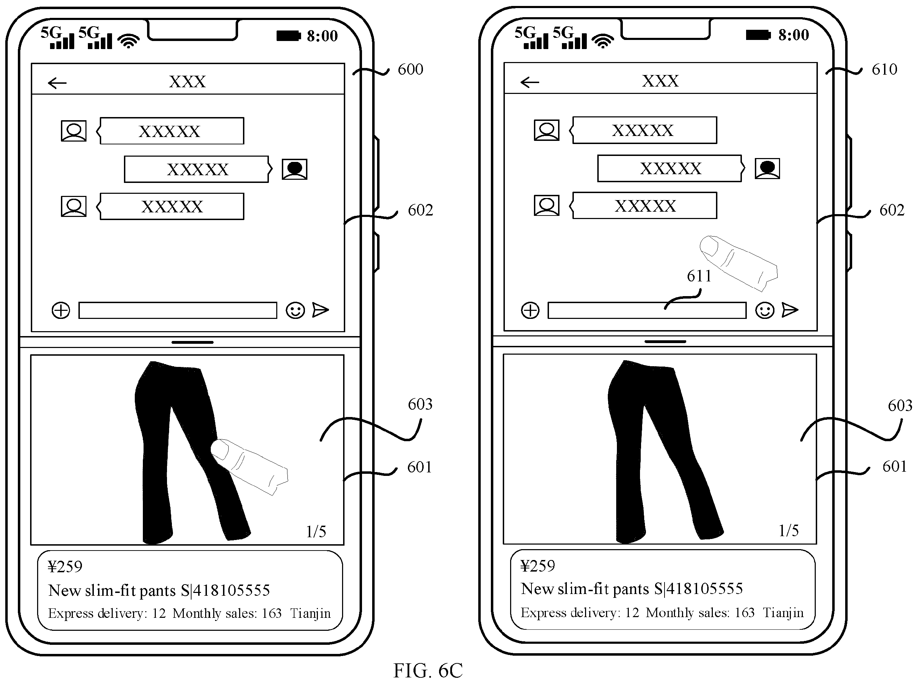

The following uses a specific application scenario as an example to describe the control content drag-out process and the control content drag-in process. It is assumed that the mobile phone displays two windows, for example, the first window and the second window. The first window and the second window are windows corresponding to different applications, for example, an interface 600 shown in FIG. 6C. The interface 600 includes a Taobao (a shopping application) application window 601 and a WeChat (a social application) application window 602. The Taobao application window 601 includes a slideable image 603. For example, if the user wants to drag the image 603 to the WeChat application window 602, the user touches and holds a to-be-dragged image in the slideable image 603, for example, may touch and hold an image on a current page. Then, the intelligent drag management module on the mobile phone may receive the touch and hold event, and find, based on touch and hold location coordinates, whether the touch and hold control supports the drag function. It is assumed that the image is the control that supports the drag function. In this case, in response to the drag operation performed by the user, the native drag module may drag out the image 603 from the Taobao application window 601, and drag the image 603 to the WeChat application window 602. After the user drags the image 603 to the WeChat application window 602, for example, the user may release the image 603 at a finger location shown in an interface 610, the mobile phone may find the first edit box in the WeChat application window 602, for example, an edit box 611 in an input state, and display the dragged image 603 in the edit box 611.

According to the foregoing embodiment, the control content can be dragged between different windows in the single-device scenario. In this method, the application does not need to be adapted to the drag function, and the system can trigger the drag function of the control content, to drag out and drag in the control content. This can reduce an application adaptation workload.

The following describes a multi-device drag scenario. Specifically, the multi-device scenario may include a scenario in which control content is dragged from a projection window to a local window, a scenario in which control content is dragged from the local window to the projection window, and a scenario in which control content is dragged from the projection window to the projection window.

For ease of description, two devices in the multi-device scenario may be respectively referred to as a "source device" and a "target device". A mobile phone and a tablet computer are used as an example. The mobile phone may be the "source device", the tablet computer may be the "target device", a local window of the tablet computer is denoted as a "first window", and a projection window of the mobile phone is denoted as a "second window".

Scenario 1: Drag control content from a local window to a projection window.

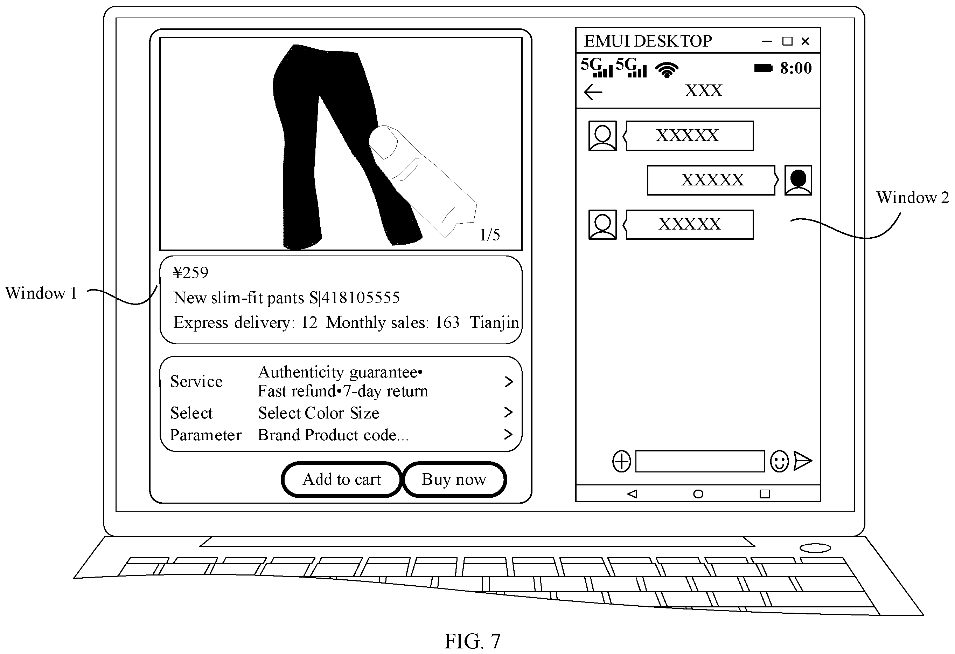

It is assumed that a display of a mobile phone is projected onto a notebook computer for display. As shown in FIG. 7, the notebook computer may include a window 1 and a window 2. The window 1 may be a local window of the notebook computer, for example, a Taobao application window, and the window 2 is the projection window of the mobile phone, for example, a WeChat application window. When a user wants to drag a control like an image in the window 1 to the window 2, because the window 1 is the local window, for a specific implementation of dragging out the control content, refer to the description of the embodiment shown in FIG. 4B. Details are not described herein.

After the user drags out the control content from the local window, because the projection window is a window that actually is run on the mobile phone (namely, a source device), cross-device processing needs to be performed when the projection window receives the dragged control content.

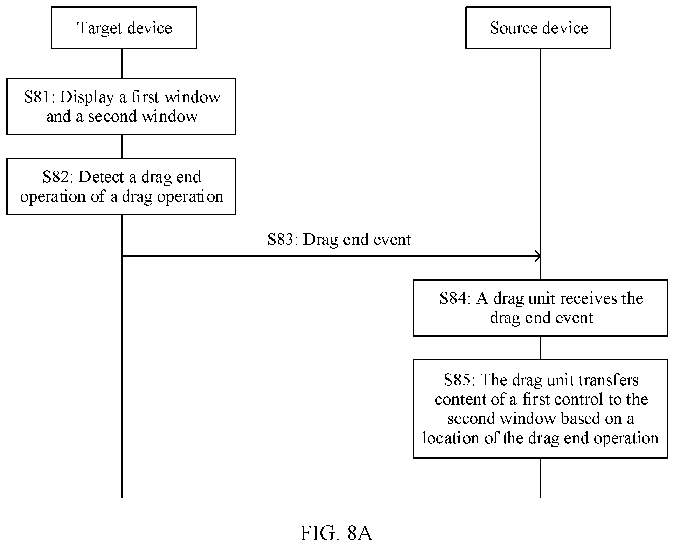

FIG. 8A is a flowchart of a control content drag method that is applied to a multi-device scenario according to an embodiment of this application. As shown in FIG. 8A, the method may include the following steps.

S81: A target device displays a first window and a second window.

S82: The target device detects a drag end operation of a drag operation.

The drag operation is used to drag content of a first control from the first window to the second window.

S83: The target device sends a drag end event to the source device.

The drag end event includes a location of the drag end operation and the content of the first control. S84: A drag unit of the source device receives the drag end event sent by the target device.

The drag unit of the source device does not belong to an application to which the second window belongs. In an example, the drag unit of the source device may belong to an operating system of the source device, for example, may belong to a framework layer or a system application of the operating system.

S85: The drag unit of the source device transfers the content of the first control to the second window based on the location of the drag end operation.

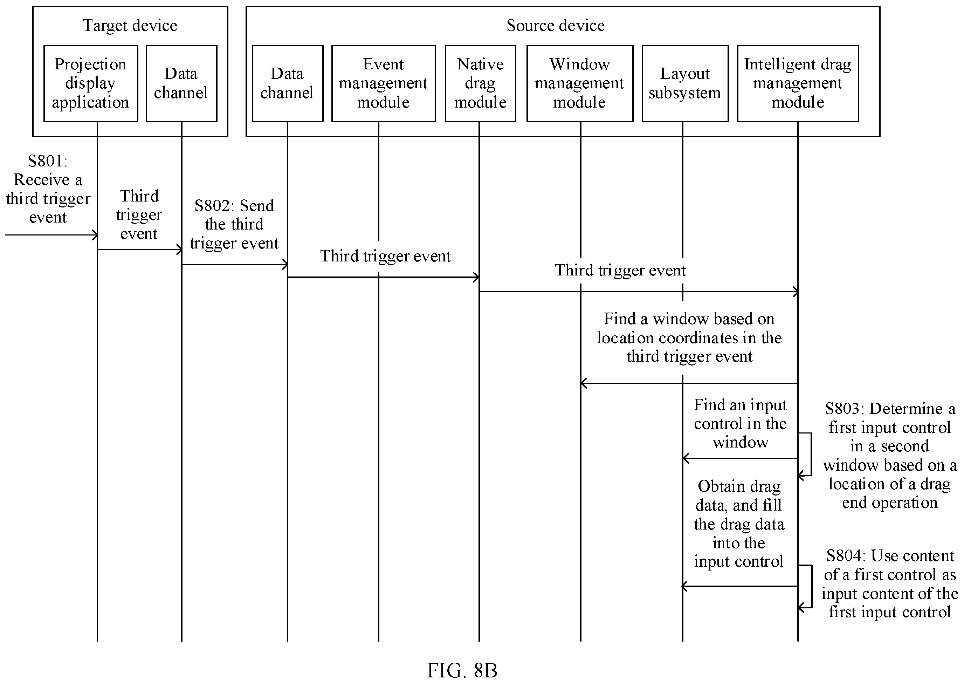

The following describes a control content drag-in process in this scenario. For example, FIG. 8B is an interaction flowchart of a control content receiving method according to an embodiment of this application. As shown in FIG. 8B, the method may include the following steps.

It should be noted that before the following steps are performed, the source device may establish a connection to the target device in advance, to implement a projection function. The source device may establish a wireless connection to the target device through Wi-Fi, Bluetooth, or the like, or may establish a wired connection. This is not limited in this application. For the process of establishing the connection relationship between the source device and the target device to implement projection, refer to implementation in a conventional technology. Details are not described herein.

S801: The target device detects a third trigger event.

The third trigger event may be a drag release event in which the user drags the control content to the second window of the target device. The third trigger event may include drag data (for example, the control content) and release location coordinates of the user.

S802: The target device sends the third trigger event to the source device.

In some embodiments, a projection display app on the target device may detect the drag release event, then transfer the drag release event to the source device over a data channel, and the source device continues to perform processing.

S803: The drag unit of the source device determines a first input control in the second window based on the location of the drag end operation.

S804: The drag unit of the source device uses the content of the first control as input content of the first input control.

In some embodiments, after receiving the third trigger event, the source device may determine, based on the release location coordinates of the user, a specific window corresponding to the release location coordinates of the user, and then determine the first input control that receives the content of the first control in the second window. This process is the same as the implementation process of S502 and S503 in the embodiment shown in FIG. 5A. For details, refer to the specific description in the embodiment shown in FIG. 5A. Details are not described herein.

Because the second window is the window that is projected by the source device onto the target device, after S804 is performed, the source device sends updated content of the second window to the target device. In this case, the target device displays the updated content of the second window. It should be understood that the updated content of the second window includes the content of the first control.

It should be noted that, different from a single-device scenario, in the multi-device scenario, the projection display application may listen to the drag event in real time, and transfer control coordinates in the drag event to the source device in real time over a cross-device channel. Then, the source device determines a release window based on the control coordinates when the user releases the control, and further finds an input control in the release window.

Scenario 2: Drag control content from a projection window to a local window.

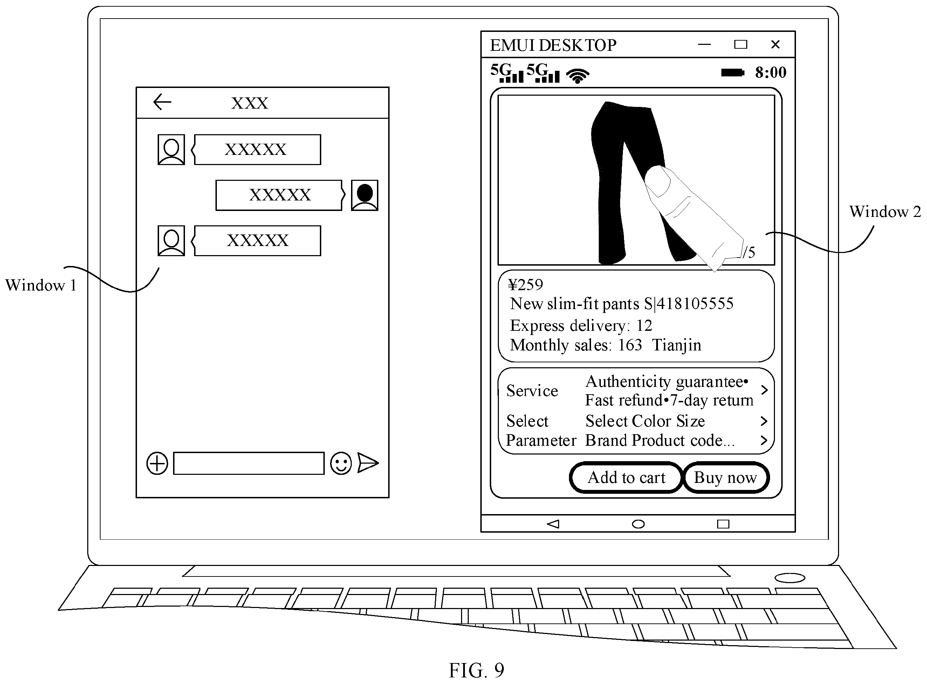

As shown in FIG. 9, it is assumed that a notebook computer may include a window 1 and a window 2. The window 1 may be a local window of the notebook computer, for example, a WeChat application window, and the window 2 is a projection window of a mobile phone, for example, a Taobao application window. When a user wants to drag a control like an image in the window 2 to the window 1, because the window 2 is the projection window, namely, a window actually running on the mobile phone, cross-device processing needs to be performed when the control content is dragged out.

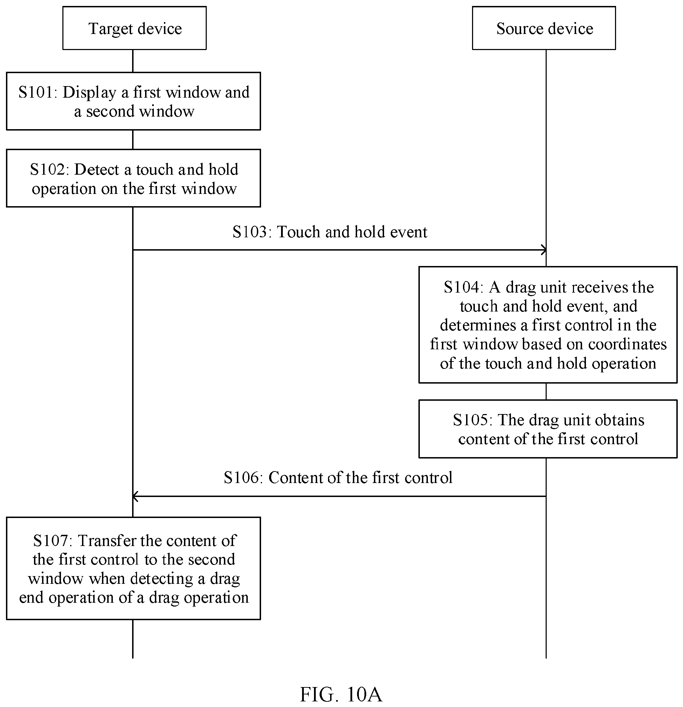

FIG. 10A is a flowchart of a control content drag method according to an embodiment of this application. As shown in FIG. 10A, the method may include the following steps.

S101: A target device displays a first window and a second window.

S102: The target device detects a touch and hold operation on the first window.

S103: The target device sends a touch and hold event to a source device.

The touch and hold event includes coordinates of the touch and hold operation.

S104: A drag unit of the source device receives the touch and hold event, and determines a first control in the first window based on coordinates of the touch and hold operation.

S105: The drag unit of the source device obtains content of the first control.

S106: The drag unit of the source device sends the content of the first control to the target device.

S107: The target device transfers the content of the first control to the second window when detecting a drag end operation of a drag operation.

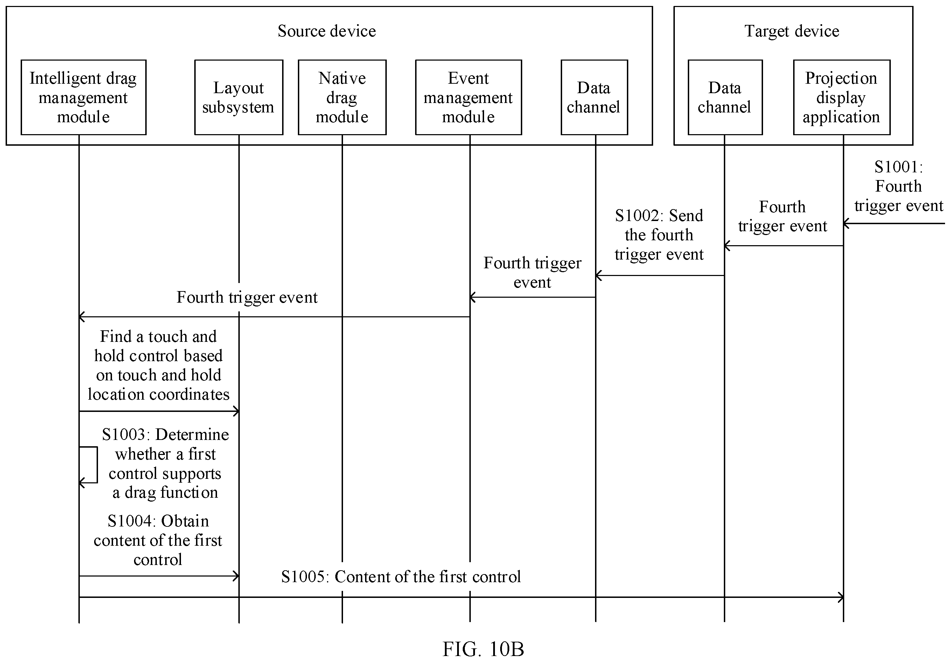

The following describes a control content drag-out process in this scenario. For example, FIG. 10B is a flowchart of a control content drag-out method according to an embodiment of this application. As shown in FIG. 10B, the method may include the following steps.

S1001: The target device receives a fourth trigger event.

The fourth trigger event may be a touch and hold event performed by the user on the first control in the second window of the target device. The touch and hold event may include touch and hold location coordinates of the user.

In this embodiment of this application, the touch and hold event is triggered on the projection window, the touch and hold location coordinates of the user are coordinates on a display of the source device, and a size of the display of the source device and a size of a display of the target device may be different. Therefore, coordinates on the target device may be converted to the coordinates on the display of the source device, to obtain coordinates corresponding to the touch and hold location of the user on the target device. It should be understood that the touch and hold location coordinates of the user included in the fourth trigger event are the coordinates on the display of the source device.

S1002: The target device sends the fourth trigger event to the source device.

In some embodiments, after the user triggers the touch and hold event on the target device, the touch and hold event performed by the user on the target device may be sent to an event management module of the source device over a cross-device data transmission channel. Then, the event management module sends the touch and hold event to an intelligent drag management module of the source device.

S1003: The drag unit of the source device determines whether the first control supports a drag function. If the first control supports the drag function, S1004 continues to be performed. If the first control does not support the drag function, the step ends.

S1004: The drag unit of the source device obtains the content of the first control.

S1005: The drag unit of the source device sends the content of the first control to the target device. It should be understood that specific implementation processes of steps S1003 to S1005 are similar to that of S403 to S405 in the embodiment shown in FIG. 4B. For details, refer to the related description in the embodiment shown in FIG. 4B. Details are not described herein.

In the foregoing process, the content of the first control may be dragged out of the projection window. Then, in response to the drag operation performed by the user on the content of the first control, the target device may execute drag animation. When the user drags the content of the first control to the local window of the target device and then releases the first control, the local window does not relate to cross-device receiving. Therefore, a specific implementation process of receiving the control content by the local window is the same as that of a receiving method of a single device. For details, refer to the specific descriptions in the embodiments shown in FIG. 5A and FIG. 5B. Details are not described herein.

It can be learned from the description of the foregoing embodiment that, in the multi-device scenario, control content dragging (including control content drag-out and control content drag-in) can be implemented between the projection window and the local window. According to the method in this application, the application does not need to be adapted to the drag function, and a system-level drag method can reduce an application adaptation workload.

Scenario 3: Drag control content from a projection window to the projection window.

In this scenario, a target device may display two projection windows. For example, both a window 1 and a window 2 are the projection windows. In addition, the window 1 and the window 2 may be windows of the target device onto which a source device projects screens of the source device as an entirety for display, or may be windows of the target device onto which the source device separately projects the screens for display. If the two windows are the windows that are projected as the entirety, the source device executes drag animation. The target device is only used to display the animation. If the two windows are the separate projection windows, the target device executes drag animation.

It should be understood that when the two windows both are the projection windows, cross-device transfer is related regardless of whether the control content is dragged out or dragged in. In this scenario, the target device is mainly configured to display the projection window. Therefore, the following mainly describes steps performed by the source device.

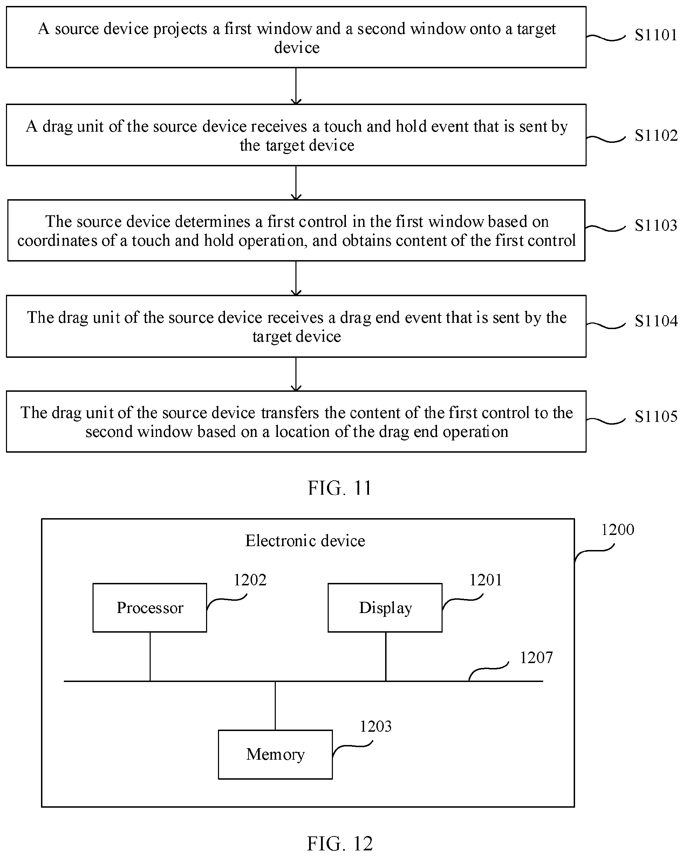

FIG. 11 is a flowchart of a control content drag method according to an embodiment of this application. As shown in FIG. 11, the method may include the following steps.

S1101: The source device projects a first window and a second window to the target device.

S1102: A drag unit of the source device receives a touch and hold event that is sent by the target device.

The touch and hold event includes coordinates of a touch and hold operation on the first window that is displayed on the target device. The drag unit does not belong to an application to which the first window belongs or an application to which the second window belongs. In addition, the first window and the second window belong to a same application or different applications.

S1103: The source device determines a first control in the first window based on the coordinates of the touch and hold operation, and obtains content of the first control.

S1104: The drag unit of the source device receives a drag end event that is sent by the target device. The drag end event includes the location of the drag end operation of the drag operation. The drag operation is used to drag the content of the first control from the first window to the second window.

A drag start operation of the drag operation is the touch and hold operation.

S1105: The drag unit of the source device transfers the content of the first control to the second window based on the location of the drag end operation.

It should be understood that, for specific implementation processes of S1102, S1103, and S1105, refer to the specific descriptions in the foregoing embodiments. Details are not described herein. According to the foregoing method, the drag unit of the electronic device may be used to drag the control content between the two projection windows. The application does not need to be adapted to the drag function. This can reduce an application adaptation workload and improve user experience.

In the foregoing embodiments provided in this application, the methods provided in embodiments of this application are described by using the electronic device as an execution body. To implement the functions in the methods provided in the foregoing embodiments of this application, the electronic device may include a hardware structure and/or a software module, to implement the functions in a form of the hardware structure, the software module, or a combination of the hardware structure and the software module. Whether a specific function in the foregoing functions is performed by using the hardware structure, the software module, or the combination of the hardware structure and the software module depends on specific applications and design constraints of the technical solutions.

As shown in FIG. 12, some other embodiments of this application disclose an electronic device. The electronic device may be an electronic device with a display. As shown in FIG. 12, the electronic device 1200 includes a display 1201, one or more processors 1202, one or more memories 1203, one or more sensors 1204 (not shown in the figure), a plurality of applications 1205 (not shown in the figure), and one or more computer programs 1206 (not shown in the figure). The foregoing devices may be connected by using one or more communication buses 1207.

It should be noted that the electronic device shown in FIG. 12 may be used as the source device (the second electronic device) in the foregoing embodiments, or may be used as the target device (the first electronic device) in the foregoing embodiments.

The display 1201 is configured to display a display interface of an application in the electronic device, or display a drag animation. The memory 1203 stores one or more computer programs, and the one or more computer programs include instructions. The processor 1202 invokes the instructions stored in the memory 1203, so that the electronic device 1200 is enabled to perform the control content drag method in the foregoing embodiment. For example, the display is configured to display a first window and a second window. The processor is configured to implement a function of a drag unit (a first drag unit or a second drag unit), and is further configured to control the display to display the first window and the second window. The instructions include instructions of an operating system. The instructions of the operating system include an instruction used to implement the function of the drag unit (the first drag unit or the second drag unit).

For example, when the instructions are invoked and executed by the processor 1202, the electronic device 1200 is enabled to perform the following step: detecting a touch and hold operation on a first control in the first window, where the drag unit does not belong to an application to which the first window belongs or an application to which the second window belongs, and the first window and the second window belong to a same application or different applications; and in response to a drag operation that uses the touch and hold operation as a drag start operation, transferring content of the first control from the first window to the second window, where the drag operation is used to drag the content of the first control from the first window to the second window.

In this embodiment of this application, the processor 1202 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor or the like. The steps of the method disclosed with reference to this embodiment of this application may be directly performed by a hardware processor, or may be performed by using a combination of hardware in the processor and a software module. The software module may be located in the memory 1203. The processor 1202 reads the program instructions from the memory 1203, and completes the steps of the foregoing method in combination with the hardware of the processor 1202.

In this embodiment of this application, the memory 1203 may be a non-volatile memory like a hard disk drive (hard disk drive, HDD), a solid-state drive (solid-state drive, SSD), or a volatile memory (volatile memory) like a RAM. The memory may alternatively be any other medium that can be configured to carry or store expected program code in a form of an instruction structure or a data structure and that can be accessed by a computer. This is not limited thereto. The memory in this embodiment of this application may alternatively be a circuit or any other apparatus that can implement a storage function, and is configured to store instructions and/or data.

A person skilled in the art may clearly understand that, for the purpose of convenient and brief description, for a specific working process of the foregoing apparatus and unit, refer to a corresponding process in the method embodiments. Details are not described herein.

Based on the foregoing embodiments, this application further provides a control content drag system. The system includes a first electronic device and a second electronic device. The first electronic device is configured to display a first window and a second window. The first window is an application window of the first electronic device, and the second window is an application window that is projected by the second electronic device onto the first electronic device. The first electronic device is further configured to send a drag end event to the second electronic device when detecting a drag end operation of a drag operation. The drag end event includes a location of the drag end operation and content of a first control. The drag operation is used to drag the content of the first control in the first window from the first window to the second window. A second drag unit of the second electronic device is configured to receive the drag end event sent by the first electronic device. The second drag unit does not belong to an application to which the second window belongs. The second drag unit is further configured to transfer the content of the first control to the second window based on the location of the drag end operation.

Based on the foregoing embodiments, this application further provides a control content drag system. The system includes a first electronic device and a second electronic device. The first electronic device is configured to display a first window and a second window. The first window is an application window that is projected by the second electronic device onto the first electronic device, and the second window is an application window of the first electronic device. The first electronic device is further configured to send a touch and hold event to the second electronic device when detecting a touch and hold operation on the first window. The touch and hold event includes coordinates of the touch and hold operation. A second drag unit of the second electronic device is configured to: receive the touch and hold event, determine a first control in the first window based on the coordinates of the touch and hold operation, and obtain content of the first control. The second drag unit does not belong to an application to which the first window belongs. The second drag unit is configured to send the content of the first control to the first electronic device. The first electronic device is further configured to transfer the content of the first control to the second window when detecting a drag end operation of a drag operation. The drag operation is used to drag the content of the first control from the first window to the second window. Based on the foregoing embodiments, this application further provides a computer storage medium. The computer storage medium stores a computer program. When the computer program is executed by a computer, the computer is enabled to perform the methods provided in the foregoing embodiments.

An embodiment of this application further provides a computer program product including instructions. When the computer program product runs on a computer, the computer is enabled to perform the methods provided in the foregoing embodiments.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of a process and/or a block in the flowcharts and/or the block diagrams. These instructions may be provided to a processor of a general-purpose computer, a dedicated computer, an embedded processor, or another programmable data processing device to generate a machine. In this way, the instructions, when executed by the processor of the computer or the another programmable data processing device, generate an apparatus for implementing functions specified in one or more processes in the flowcharts and/or in one or more blocks in the block diagrams. Alternatively, these computer program instructions may be stored in a computer-readable memory that can indicate a computer or another programmable data processing device to work in a specific manner. In this way, the instructions stored in the computer-readable memory generate an artifact that includes an instruction apparatus. The instruction apparatus implements a specific function in one or more processes in the flowcharts and/or in one or more blocks in the block diagrams. Alternatively, these computer program instructions may be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. A control content drag method, comprising:
displaying (S41), by a first electronic device, a first window and a second window;
detecting (S42), by a drag unit of the first electronic device, a touch and hold operation on a first control in the first window, wherein the drag unit does not belong to an application to which the first window belongs or an application to which the second window belongs, and the first window and the second window belong to a same application or different applications; and
in response to a drag operation that uses the touch and hold operation as a drag start operation, transferring (S43), by the drag unit, content of the first control from the first window to the second window, wherein the drag operation is used to drag the content of the first control from the first window to the second window,
wherein the transferring (S43), by the drag unit, content of the first control from the first window to the second window comprises:
detecting, by the drag unit, a drag end operation;
determining, by the drag unit, a first input control in the second window based on a location of the drag end operation; and
using, by the drag unit, the content of the first control as input content of the first input control,
wherein the determining, by the drag unit, a first input control in the second window based on a location of the drag end operation comprises:
determining, by the drag unit based on the location of the drag end operation, that a window on which the drag end operation is performed is the second window; and
using, by the drag unit, a control in an input state in the second window as the first input control, or using an input control that is closest to the location of the drag end operation in the second window as the first input control,
**characterized in that**
a priority of using the control in the input state in the second window as the first input control is higher than a priority of using the input control that is closest to the location of the drag end operation in the second window as the first input control.

2. The method according to claim 1, wherein the drag unit belongs to an operating system of the first electronic device.

3. The method according to claim 2, wherein the drag unit belongs to a framework layer of the operating system.

4. The method according to any one of claims 1 to 3, wherein the detecting (S42), by a drag unit of the first electronic device, a touch and hold operation on a first control in the first window comprises:
determining, based on a location of the touch and hold operation, that the touch and hold operation is the touch and hold operation on the first control in the first window.

5. The method according to any one of claims 1 to 4, wherein after the detecting (S42), by a drag unit of the first electronic device, a touch and hold operation on a first control in the first window, and before the transferring (S43) content of the first control from the first window to the second window, the method further comprises:
determining, by the drag unit based on a control type of the first control, that the first control supports a drag function.

6. A control content drag method, comprising:
projecting (S1101), by a second electronic device, a first window and a second window onto a first electronic device;
receiving (S1102), by a drag unit of the second electronic device, a touch and hold event sent by the first electronic device, wherein the touch and hold event comprises coordinates of a touch and hold operation on the first window that is displayed on the first electronic device, the drag unit does not belong to an application to which the first window belongs or an application to which the second window belongs, and the first window and the second window belong to a same application or different applications;
determining (S1103), by the second electronic device, a first control in the first window based on the coordinates of the touch and hold operation, and obtaining content of the first control;
receiving (S1104), by the drag unit, a drag end event sent by the first electronic device, wherein the drag end event comprises a location of a drag end operation of a drag operation, the drag operation is used to drag the content of the first control from the first window to the second window, and a drag start operation of the drag operation is the touch and hold operation; and
transferring (S1105), by the drag unit, the content of the first control to the second window based on the location of the drag end operation,
wherein the transferring (S1105), by the drag unit, the content of the first control to the second window based on the location of the drag end operation comprises:
determining, by the drag unit, a first input control in the second window based on the location of the drag end operation; and
using, by the drag unit, the content of the first control as input content of the first input control,
wherein the determining, by the drag unit, a first input control in the second window based on the location of the drag end operation comprises:
determining, by the drag unit based on the location of the drag end operation, that a window on which the drag end operation is performed is the second window; and
using, by the drag unit, a control in an input state in the second window as the first input control, or using a control that is closest to the location of the drag end operation in the second window as the first input control, **characterized in that** a priority of using the control in the input state in the second window as the first input control is higher than a priority of using the input control that is closest to the location of the drag end operation in the second window as the first input control.

7. The method according to claim 6, wherein the drag unit belongs to an operating system of the second electronic device.

8. The method according to claim 7, wherein the drag unit belongs to a framework layer of the operating system.

9. The method according to claim 6, wherein before the obtaining, by the second electronic device, content of the first control, the method further comprises:
determining, by the drag unit based on a control type of the first control, that the first control supports a drag function.

10. A control content drag system, wherein the system comprises a first electronic device and a second electronic device, wherein
the first electronic device is configured to display a first window and a second window, wherein the first window is an application window of the first electronic device, and the second window is an application window that is projected by the second electronic device onto the first electronic device;
the first electronic device is further configured to send a drag end event to the second electronic device when detecting a drag end operation of a drag operation, wherein the drag end event comprises a location of the drag end operation and content of a first control, and the drag operation is used to drag the content of the first control in the first window from the first window to the second window;
a second drag unit of the second electronic device is configured to receive the drag end event sent by the first electronic device, wherein the second drag unit does not belong to an application to which the second window belongs; and
the second drag unit is further configured to transfer the content of the first control to the second window based on the location of the drag end operation,
wherein the transferring content of the first control to the second window comprises:
detecting, by the second drag unit, a drag end operation;
determining, by the second drag unit, a first input control in the second window based on a location of the drag end operation; and
using, by the second drag unit, the content of the first control as input content of the first input control,
wherein the determining, by the second drag unit, a first input control in the second window based on a location of the drag end operation comprises:
determining, by the second drag unit based on the location of the drag end operation, that a window on which the drag end operation is performed is the second window; and
using, by the second drag unit, a control in an input state in the second window as the first input control, or using an input control that is closest to the location of the drag end operation in the second window as the first input control,
**characterized in that**
a priority of using the control in the input state in the second window as the first input control is higher than a priority of using the input control that is closest to the location of the drag end operation in the second window as the first input control.

11. A control content drag system, wherein the system comprises a first electronic device and a second electronic device, wherein
the first electronic device is configured to display a first window and a second window, wherein the first window is an application window that is projected by the second electronic device onto the first electronic device, and the second window is an application window of the first electronic device;
the first electronic device is further configured to send a touch and hold event to the second electronic device when detecting a touch and hold operation on the first window, wherein the touch and hold event comprises coordinates of the touch and hold operation;
a second drag unit of the second electronic device is configured to: receive the touch and hold event, determine a first control in the first window based on the coordinates of the touch and hold operation, and obtain content of the first control, wherein the second drag unit does not belong to an application to which the first window belongs;
the second drag unit is configured to send the content of the first control to the first electronic device; and
the first electronic device is further configured to transfer the content of the first control to the second window when detecting a drag end operation of a drag operation, wherein the drag operation is used to drag the content of the first control from the first window to the second window,
wherein the transferring content of the first control to the second window comprises:
detecting, by the second drag unit, a drag end operation;
determining, by the second drag unit, a first input control in the second window based on a location of the drag end operation; and
using, by the second drag unit, the content of the first control as input content of the first input control,
wherein the determining, by the second drag unit, a first input control in the second window based on a location of the drag end operation comprises:
determining, by the second drag unit based on the location of the drag end operation, that a window on which the drag end operation is performed is the second window; and
using, by the second drag unit, a control in an input state in the second window as the first input control, or using an input control that is closest to the location of the drag end operation in the second window as the first input control,
**characterized in that**
a priority of using the control in the input state in the second window as the first input control is higher than a priority of using the input control that is closest to the location of the drag end operation in the second window as the first input control.

## Patentansprüche

1. Ziehverfahren für Steuerinhalte, umfassend:
Anzeigen (S41) eines ersten Fensters und eines zweiten Fensters durch eine erste elektronische Vorrichtung;
Erfassen (S42) eines Berührungs- und Haltevorgangs auf einem ersten Steuerelement in dem ersten Fenster durch eine Zieheinheit der ersten elektronischen Vorrichtung, wobei die Zieheinheit nicht zu einer Anwendung, zu welcher das erste Fenster gehört, bzw. nicht zu einer Anwendung gehört, zu welcher das zweite Fenster gehört, und das erste Fenster und das zweite Fenster zu derselben Anwendung oder zu verschiedenen Anwendungen gehören; und
als Reaktion auf einen Ziehvorgang, der den Berührungs- und Haltevorgang als einen Ziehstartvorgang verwendet, Übertragen (S43) der Inhalte des ersten Steuerelements durch die Zieheinheit von dem ersten Fenster zu dem zweiten Fenster, wobei der Ziehvorgang verwendet wird, um die Inhalte des ersten Steuerelements von dem ersten Fenster zu dem zweiten Fenster zu ziehen,
wobei das Übertragen (S43) der Inhalte des ersten Steuerelements von dem ersten Fenster zu dem zweiten Fenster durch die Zieheinheit Folgendes umfasst:
Erfassen eines Ziehendvorgangs durch die Zieheinheit;
Bestimmen eines ersten Eingabesteuerelements in dem zweiten Fenster basierend auf einer Position des Ziehendvorgangs durch die Zieheinheit; und
Verwenden der Inhalte des ersten Steuerelements durch die Zieheinheit als Eingabeinhalte des ersten Eingabesteuerelements,
wobei das Bestimmen eines ersten Eingabesteuerelements in dem zweiten Fenster basierend auf einer Position des Ziehendvorgangs durch die Zieheinheit Folgendes umfasst:
Bestimmen durch die Zieheinheit basierend auf der Position des Ziehendvorgangs, dass ein Fenster, auf welchem der Ziehendvorgang durchgeführt wird, das zweite Fenster ist; und
Verwenden eines Steuerelements in einem Eingabezustand in dem zweiten Fenster als erstes Eingabesteuerelement durch die Zieheinheit oder Verwenden eines Eingabesteuerelements, das der Position des Ziehendvorgangs in dem zweiten Fenster am nächsten liegt, als erstes Eingabesteuerelement, **dadurch gekennzeichnet, dass** eine Priorität zum Verwenden des Steuerelements in dem Eingabezustand in dem zweiten Fenster als erstes Eingabesteuerelement höher als eine Priorität zum Verwenden des Eingabesteuerelements ist, das der Position des Ziehendvorgangs in dem zweiten Fenster am nächsten liegt, als erstes Eingabesteuerelement.

2. Verfahren nach Anspruch 1, wobei die Zieheinheit zu einem Betriebssystem der ersten elektronischen Vorrichtung gehört.

3. Verfahren nach Anspruch 2, wobei die Zieheinheit zu einer Rahmenwerksebene des Betriebssystems gehört.

4. Verfahren nach einem der Ansprüche 1 bis 3, wobei das Erfassen (S42) eines Berührungs- und Haltevorgangs auf einem ersten Steuerelement in dem ersten Fenster durch eine Zieheinheit der ersten elektronischen Vorrichtung Folgendes umfasst:
Bestimmen basierend auf einer Position des Berührungs- und Haltevorgangs, dass der Berührungs- und Haltevorgang der Berührungs- und Haltevorgang auf dem ersten Steuerelement in dem ersten Fenster ist.

5. Verfahren nach einem der Ansprüche 1 bis 4, wobei das Verfahren nach dem Erfassen (S42) eines Berührungs- und Haltevorgangs auf einem ersten Steuerelement in dem ersten Fenster durch eine Zieheinheit der ersten elektronischen Vorrichtung und vor dem Übertragen (S43) von Inhalten des ersten Steuerelements von dem ersten Fenster zu dem zweiten Fenster ferner Folgendes umfasst:
Bestimmen durch die Zieheinheit basierend auf einem Steuertyp des ersten Steuerelements, dass das erste Steuerelement eine Ziehfunktion unterstützt.

6. Ziehverfahren für Steuerinhalte, umfassend:
Projizieren (S1101) eines ersten Fensters und eines zweiten Fensters durch eine zweite elektronische Vorrichtung auf eine erste elektronische Vorrichtung;
Empfangen (S1102) eines Berührungs- und Halteereignisses, das durch die erste elektronische Vorrichtung gesendet wird, durch eine Zieheinheit der zweiten elektronischen Vorrichtung, wobei das Berührungs- und Halteereignis Koordinaten eines Berührungs- und Haltevorgangs auf dem ersten Fenster umfasst, das auf der ersten elektronischen Vorrichtung angezeigt wird, die Zieheinheit nicht zu einer Anwendung, zu welcher das erste Fenster gehört, bzw. nicht zu einer Anwendung gehört, zu welcher das zweite Fenster gehört, und das erste Fenster und das zweite Fenster zu derselben Anwendung oder zu verschiedenen Anwendungen gehören;
Bestimmen (S1103) eines ersten Steuerelements in dem ersten Fenster durch die zweite elektronische Vorrichtung basierend auf den Koordinaten des Berührungs- und Haltevorgangs und Erlangen der Inhalte des ersten Steuerelements;
Empfangen (S1104) eines Ziehendereignisses, das durch die erste elektronische Vorrichtung gesendet wird, durch die Zieheinheit, wobei das Ziehendereignis eine Position eines Ziehendvorgangs eines Ziehvorgangs umfasst, der Ziehvorgang verwendet wird, um die Inhalte des ersten Steuerelements von dem ersten Fenster zu dem zweiten Fenster zu ziehen, und ein Ziehstartvorgang des Ziehvorgangs der Berührungs- und Haltevorgang ist; und
Übertragen (S1105) der Inhalte des ersten Steuerelements zu dem zweiten Fenster durch die Zieheinheit basierend auf der Position des Ziehendvorgangs,
wobei das Übertragen (S1105) der Inhalte des ersten Steuerelements zu dem zweiten Fenster durch die Zieheinheit basierend auf der Position des Ziehendvorgangs Folgendes umfasst:
Bestimmen eines ersten Eingabesteuerelements in dem zweiten Fenster basierend auf der Position des Ziehendvorgangs durch die Zieheinheit; und
Verwenden der Inhalte des ersten Steuerelements durch die Zieheinheit als Eingabeinhalte des ersten Eingabesteuerelements,
wobei das Bestimmen eines ersten Eingabesteuerelements in dem zweiten Fenster basierend auf der Position des Ziehendvorgangs durch die Zieheinheit Folgendes umfasst:
Bestimmen durch die Zieheinheit basierend auf der Position des Ziehendvorgangs, dass ein Fenster, auf welchem der Ziehendvorgang durchgeführt wird, das zweite Fenster ist; und
Verwenden eines Steuerelements in einem Eingabezustand in dem zweiten Fenster als erstes Eingabesteuerelement durch die Zieheinheit oder Verwenden eines Steuerelements, das der Position des Ziehendvorgangs in dem zweiten Fenster am nächsten liegt, als erstes Eingabesteuerelement,
**dadurch gekennzeichnet, dass** eine Priorität zum Verwenden des Steuerelements in dem Eingabezustand in dem zweiten Fenster als erstes Eingabesteuerelement höher als eine Priorität zum Verwenden des Eingabesteuerelements ist, das der Position des Ziehendvorgangs in dem zweiten Fenster am nächsten liegt, als erstes Eingabesteuerelement.

7. Verfahren nach Anspruch 6, wobei die Zieheinheit zu einem Betriebssystem der zweiten elektronischen Vorrichtung gehört.

8. Verfahren nach Anspruch 7, wobei die Zieheinheit zu einer Rahmenwerksebene des Betriebssystems gehört.

9. Verfahren nach Anspruch 6, wobei das Verfahren vor dem Erlangen der Inhalte des ersten Steuerelements durch die zweite elektronische Vorrichtung ferner Folgendes umfasst:
Bestimmen durch die Zieheinheit basierend auf einem Steuertyp des ersten Steuerelements, dass das erste Steuerelementeine Ziehfunktion unterstützt.

10. Ziehsystem für Steuerinhalte, wobei das System eine erste elektronische Vorrichtung und eine zweite elektronische Vorrichtung umfasst, wobei
die erste elektronische Vorrichtung dazu konfiguriert ist, ein erstes Fenster und ein zweites Fenster anzuzeigen, wobei das erste Fenster ein Anwendungsfenster der ersten elektronischen Vorrichtung ist, und das zweite Fenster ein Anwendungsfenster ist, das durch die zweite elektronische Vorrichtung auf die erste elektronische Vorrichtung projiziert wird;
die erste elektronische Vorrichtung ferner dazu konfiguriert ist, ein Ziehendereignis beim Erfassen eines Ziehendvorgangs eines Ziehvorgangs an die zweite elektronische Vorrichtung zu senden, wobei das Ziehendereignis eine Position des Ziehendvorgangs und Inhalte eines ersten Steuerelements umfasst, und der Ziehvorgang verwendet wird, um die Inhalte des ersten Steuerelements in dem ersten Fenster von dem ersten Fenster zu dem zweiten Fenster zu ziehen;
eine zweite Zieheinheit der zweiten elektronischen Vorrichtung dazu konfiguriert ist, das durch die erste elektronische Vorrichtung gesendete Ziehendereignis zu empfangen, wobei die zweite Zieheinheit nicht zu einer Anwendung gehört, zu welcher das zweite Fenster gehört; und
die zweite Zieheinheit ferner dazu konfiguriert ist, die Inhalte des ersten Steuerelements basierend auf der Position des Ziehendvorgangs an das zweite Fenster zu übertragen,
wobei das Übertragen von Inhalten des ersten Steuerelements zu dem zweiten Fenster Folgendes umfasst:
Erfassen eines Ziehendvorgangs durch die zweite Zieheinheit;
Bestimmen eines ersten Eingabesteuerelements in dem zweiten Fenster basierend auf einer Position des Ziehendvorgangs durch die zweite Zieheinheit; und
Verwenden der Inhalte des ersten Steuerelements durch die zweite Zieheinheit als Eingabeinhalte des ersten Eingabesteuerelements,
wobei das Bestimmen eines ersten Eingabesteuerelements in dem zweiten Fenster basierend auf einer Position des Ziehendvorgangs durch die zweite Zieheinheit Folgendes umfasst:
Bestimmen durch die zweite Zieheinheit basierend auf der Position des Ziehendvorgangs, dass ein Fenster, auf welchem der Ziehendvorgang durchgeführt wird, das zweite Fenster ist; und Verwenden eines Steuerelements in einem Eingabezustand in dem zweiten Fenster als erstes Eingabesteuerelement durch die zweite Zieheinheit oder Verwenden eines Eingabesteuerelements, das der Position des Ziehendvorgangs in dem zweiten Fenster am nächsten liegt, als erstes Eingabesteuerelement, **dadurch gekennzeichnet, dass** eine Priorität zum Verwenden des Steuerelements in dem Eingabezustand in dem zweiten Fenster als erstes Eingabesteuerelement höher als eine Priorität zum Verwenden des Eingabesteuerelements ist, das der Position des Ziehendvorgangs in dem zweiten Fenster am nächsten liegt, als erstes Eingabesteuerelement.

11. Ziehsystem für Steuerinhalte, wobei das System eine erste elektronische Vorrichtung und eine zweite elektronische Vorrichtung umfasst, wobei
die erste elektronische Vorrichtung dazu konfiguriert ist, ein erstes Fenster und ein zweites Fenster anzuzeigen, wobei das erste Fenster ein Anwendungsfenster ist, das durch die zweite elektronische Vorrichtung auf die erste elektronische Vorrichtung projiziert wird, und das zweite Fenster ein Anwendungsfenster der ersten elektronischen Vorrichtung ist; die erste elektronische Vorrichtung ferner dazu konfiguriert ist, ein Berührungs- und Halteereignis an die zweite elektronische Vorrichtung beim Erfassen eines Berührungs- und Haltevorgangs auf dem ersten Fenster zu senden, wobei das Berührungs- und Halteereignis Koordinaten des Berührungs- und Haltevorgangs umfasst;
eine zweite Zieheinheit der zweiten elektronischen Vorrichtung dazu konfiguriert ist: das Berührungs- und Halteereignis zu empfangen, ein erstes Steuerelement in dem ersten Fenster basierend auf den Koordinaten des Berührungs- und Haltevorgangs zu bestimmen und Inhalte des ersten Steuerelements zu erlangen, wobei die zweite Zieheinheit nicht zu einer Anwendung gehört, zu welcher das erste Fenster gehört;
die zweite Zieheinheit dazu konfiguriert ist, die Inhalte des ersten Steuerelements an die erste elektronische Vorrichtung zu senden; und
die erste elektronische Vorrichtung ferner dazu konfiguriert ist, die Inhalte des ersten Steuerelements beim Erfassen eines Ziehendvorgangs eines Ziehvorgangs an das zweite Fenster zu übertragen, wobei der Ziehvorgang verwendet wird, um die Inhalte des ersten Steuerelements von dem ersten Fenster zu dem zweiten Fenster zu ziehen,
wobei das Übertragen von Inhalten des ersten Steuerelements zu dem zweiten Fenster Folgendes umfasst:
Erfassen eines Ziehendvorgangs durch die zweite Zieheinheit;
Bestimmen eines ersten Eingabesteuerelements in dem zweiten Fenster basierend auf einer Position des Ziehendvorgangs durch die zweite Zieheinheit; und
Verwenden der Inhalte des ersten Steuerelements durch die zweite Zieheinheit als Eingabeinhalte des ersten Eingabesteuerelements,
wobei das Bestimmen eines ersten Eingabesteuerelements in dem zweiten Fenster basierend auf einer Position des Ziehendvorgangs durch die zweite Zieheinheit Folgendes umfasst:
Bestimmen durch die zweite Zieheinheit basierend auf der Position des Ziehendvorgangs, dass ein Fenster, auf welchem der Ziehendvorgang durchgeführt wird, das zweite Fenster ist; und Verwenden eines Steuerelements in einem Eingabezustand in dem zweiten Fenster als erstes Eingabesteuerelement durch die zweite Zieheinheit oder Verwenden eines Eingabesteuerelements, das der Position des Ziehendvorgangs in dem zweiten Fenster am nächsten liegt, als erstes Eingabesteuerelement, **dadurch gekennzeichnet, dass** eine Priorität zum Verwenden des Steuerelements in dem Eingabezustand in dem zweiten Fenster als erstes Eingabesteuerelement höher als eine Priorität zum Verwenden des Eingabesteuerelements ist, das der Position des Ziehendvorgangs in dem zweiten Fenster am nächsten liegt, als erstes Eingabesteuerelement.

## Revendications

1. Procédé de glissement de contenu de commande, comprenant :
l'affichage (S41), par un premier dispositif électronique, d'une première fenêtre et d'une seconde fenêtre ;
la détection (S42), par une unité de glissement du premier dispositif électronique, d'une opération de toucher et de maintien sur une première commande dans la première fenêtre,
dans lequel l'unité de glissement n'appartient ni à une application à laquelle la première fenêtre appartient ni à une application à laquelle la seconde fenêtre appartient, et la première fenêtre et la seconde fenêtre appartiennent à une même application ou à des applications différentes ; et
en réponse à une opération de glissement qui utilise l'opération de toucher et de maintien comme opération de démarrage de glissement, le transfert (S43), par l'unité de glissement, du contenu de la première commande de la première fenêtre vers la seconde fenêtre, dans lequel l'opération de glissement est utilisée pour glisser le contenu de la première commande de la première fenêtre vers la seconde fenêtre,
dans lequel le transfert (S43), par l'unité de glissement, du contenu de la première commande de la première fenêtre vers la seconde fenêtre comprend :
la détection, par l'unité de glissement, d'une opération de fin de glissement ;
la détermination, par l'unité de glissement, d'une première commande d'entrée dans la seconde fenêtre sur la base d'un emplacement de l'opération de fin de glissement ; et
l'utilisation, par l'unité de glissement, du contenu de la première commande comme contenu d'entrée de la première commande d'entrée,
dans lequel la détermination, par l'unité de glissement, d'une première commande d'entrée dans la seconde fenêtre sur la base d'un emplacement de l'opération de fin de glissement comprend :
la détermination, par l'unité de glissement sur la base de l'emplacement de l'opération de fin de glissement, qu'une fenêtre sur laquelle l'opération de fin de glissement est réalisée est la seconde fenêtre ; et
l'utilisation, par l'unité de glissement, d'une commande dans un état d'entrée dans la seconde fenêtre comme première commande d'entrée, ou l'utilisation d'une commande d'entrée qui est la plus proche de l'emplacement de l'opération de fin de glissement dans la seconde fenêtre comme première commande d'entrée,
**caractérisé en ce que**
une priorité d'utilisation de la commande dans l'état d'entrée dans la seconde fenêtre comme première commande d'entrée est supérieure à une priorité d'utilisation de la commande d'entrée qui est la plus proche de l'emplacement de l'opération de fin de glissement dans la seconde fenêtre comme première commande d'entrée.

2. Procédé selon la revendication 1, dans lequel l'unité de glissement appartient à un système d'exploitation du premier dispositif électronique.

3. Procédé selon la revendication 2, dans lequel l'unité de glissement appartient à une couche de structure du système d'exploitation.

4. Procédé selon l'une quelconque des revendications 1 à 3, dans lequel la détection (S42), par une unité de glissement du premier dispositif électronique, d'une opération de toucher et de maintien sur une première commande dans la première fenêtre comprend :
la détermination, sur la base d'un emplacement de l'opération de toucher et de maintien, que l'opération de toucher et de maintien est l'opération de toucher et de maintien sur la première commande dans la première fenêtre.

5. Procédé selon l'une quelconque des revendications 1 à 4, dans lequel après la détection (S42), par une unité de glissement du premier dispositif électronique, d'une opération de toucher et de maintien sur une première commande dans la première fenêtre, et avant le transfert (S43) du contenu de la première commande de la première fenêtre vers la seconde fenêtre, le procédé comprend en outre :
la détermination, par l'unité de glissement sur la base d'un type de commande de la première commande, que la première commande prend en charge une fonction de glissement.

6. Procédé de glissement de contenu de commande, comprenant :
la projection (S1101), par un second dispositif électronique, d'une première fenêtre et d'une seconde fenêtre sur un premier dispositif électronique ;
la réception (S1102), par une unité de glissement du second dispositif électronique, d'un évènement de toucher et de maintien envoyé par le premier dispositif électronique, dans lequel l'évènement de toucher et de maintien comprend des coordonnées d'une opération de toucher et de maintien sur la première fenêtre qui est affichée sur le premier dispositif électronique, l'unité de glissement n'appartient ni à une application à laquelle la première fenêtre appartient ni à une application à laquelle la seconde fenêtre appartient, et la première fenêtre et la seconde fenêtre appartiennent à une même application ou des applications différentes ;
la détermination (S1103), par le second dispositif électronique, d'une première commande dans la première fenêtre sur la base des coordonnées de l'opération de toucher et de maintien, et l'obtention de contenu de la première commande ;
la réception (S1104), par l'unité de glissement, d'un événement de fin de glissement envoyé par le premier dispositif électronique, dans lequel l'événement de fin de glissement comprend un emplacement d'une opération de fin de glissement d'une opération de glissement, l'opération de glissement est utilisée pour glisser le contenu de la première commande de la première fenêtre vers la seconde fenêtre, et une opération de début de glissement de l'opération de glissement est l'opération de toucher et de maintien ; et
le transfert (S1105), par l'unité de glissement, du contenu de la première commande vers la seconde fenêtre sur la base de l'emplacement de l'opération de fin de glissement,
dans lequel le transfert (S1105), par l'unité de glissement, du contenu de la première commande vers la seconde fenêtre sur la base de l'emplacement de l'opération de fin de glissement comprend :
la détermination, par l'unité de glissement, d'une première commande d'entrée dans la seconde fenêtre sur la base de l'emplacement de l'opération de fin de glissement ; et
l'utilisation, par l'unité de glissement, du contenu de la première commande comme contenu d'entrée de la première commande d'entrée,
dans lequel la détermination, par l'unité de glissement, d'une première commande d'entrée dans la seconde fenêtre sur la base de l'emplacement de l'opération de fin de glissement comprend :
la détermination, par l'unité de glissement sur la base de l'emplacement de l'opération de fin de glissement, qu'une fenêtre sur laquelle l'opération de fin de glissement est réalisée est la seconde fenêtre ; et
l'utilisation, par l'unité de glissement, d'une commande dans un état d'entrée dans la seconde fenêtre comme première commande d'entrée, ou l'utilisation d'une commande qui est la plus proche de l'emplacement de l'opération de fin de glissement dans la seconde fenêtre comme première commande d'entrée, **caractérisé en ce que**
une priorité d'utilisation de la commande dans l'état d'entrée dans la seconde fenêtre comme première commande d'entrée est supérieure à une priorité d'utilisation de la commande d'entrée qui est la plus proche de l'emplacement de l'opération de fin de glissement dans la seconde fenêtre comme première commande d'entrée.

7. Procédé selon la revendication 6, dans lequel l'unité de glissement appartient à un système d'exploitation du second dispositif électronique.

8. Procédé selon la revendication 7, dans lequel l'unité de glissement appartient à une couche de structure du système d'exploitation.

9. Procédé selon la revendication 6, dans lequel avant l'obtention, par le second dispositif électronique, du contenu de la première commande, le procédé comprend en outre :
la détermination, par l'unité de glissement sur la base d'un type de commande de la première commande, que la première commande prend en charge une fonction de glissement.

10. Système de glissement de contenu de commande, dans lequel le système comprend un premier dispositif électronique et un second dispositif électronique, dans lequel
le premier dispositif électronique est configuré pour afficher une première fenêtre et une seconde fenêtre, dans lequel la première fenêtre est une fenêtre d'application du premier dispositif électronique, et la seconde fenêtre est une fenêtre d'application qui est projetée par le second dispositif électronique sur le premier dispositif électronique ;
le premier dispositif électronique est en outre configuré pour envoyer un évènement de fin de glissement au second dispositif électronique lors de la détection d'une opération de fin de glissement d'une opération de glissement, dans lequel l'évènement de fin de glissement comprend un emplacement de l'opération de fin de glissement et un contenu d'une première commande, et l'opération de glissement est utilisée pour glisser le contenu de la première commande dans la première fenêtre de la première fenêtre vers la seconde fenêtre ;
une seconde unité de glissement du second dispositif électronique est configurée pour recevoir l'événement de fin de glissement envoyé par le premier dispositif électronique, dans lequel la seconde unité de glissement n'appartient pas à une application à laquelle la seconde fenêtre appartient ; et
la seconde unité de glissement est en outre configurée pour transférer le contenu de la première commande vers la seconde fenêtre sur la base de l'emplacement de l'opération de fin de glissement,
dans lequel le transfert du contenu de la première commande vers la seconde fenêtre comprend :
la détection, par la seconde unité de glissement, d'une opération de fin de glissement ;
la détermination, par la seconde unité de glissement, d'une première commande d'entrée dans la seconde fenêtre sur la base d'un emplacement de l'opération de fin de glissement ; et
l'utilisation, par la seconde unité de glissement, du contenu de la première commande comme contenu d'entrée de la première commande d'entrée,
dans lequel la détermination, par la seconde unité de glissement, d'une première commande d'entrée dans la seconde fenêtre sur la base d'un emplacement de l'opération de fin de glissement comprend :
la détermination, par la seconde unité de glissement sur la base de l'emplacement de l'opération de fin de glissement, qu'une fenêtre sur laquelle l'opération de fin de glissement est réalisée est la seconde fenêtre ; et
l'utilisation, par la seconde unité de glissement, d'une commande dans un état d'entrée dans la seconde fenêtre comme première commande d'entrée, ou l'utilisation d'une commande d'entrée qui est la plus proche de l'emplacement de l'opération de fin de glissement dans la seconde fenêtre comme première commande d'entrée, **caractérisé en ce que**
une priorité d'utilisation de la commande dans l'état d'entrée dans la seconde fenêtre comme première commande d'entrée est supérieure à une priorité d'utilisation de la commande d'entrée qui est la plus proche de l'emplacement de l'opération de fin de glissement dans la seconde fenêtre comme première commande d'entrée.

11. Système de glissement de contenu de commande, dans lequel le système comprend un premier dispositif électronique et un second dispositif électronique, dans lequel
le premier dispositif électronique est configuré pour afficher une première fenêtre et une seconde fenêtre, dans lequel la première fenêtre est une fenêtre d'application qui est projetée par le second dispositif électronique sur le premier dispositif électronique, et la seconde fenêtre est une fenêtre d'application du premier dispositif électronique ;
le premier dispositif électronique est en outre configuré pour envoyer un événement de toucher et de maintien au second dispositif électronique lorsqu'il détecte une opération de toucher et de maintien sur la première fenêtre, dans lequel l'événement de toucher et de maintien comprend les coordonnées de l'opération de toucher et de maintien ;
une seconde unité de glissement du second dispositif électronique est configurée pour : recevoir l'événement de toucher et de maintien, déterminer une première commande dans la première fenêtre sur la base des coordonnées de l'opération de toucher et de maintien, et obtenir le contenu de la première commande, dans lequel la seconde unité de glissement n'appartient pas à une application à laquelle la première fenêtre appartient ;
la seconde unité de glissement est configurée pour envoyer le contenu de la première commande au premier dispositif électronique ; et
le premier dispositif électronique est en outre configuré pour transférer le contenu de la première commande vers la seconde fenêtre lors de la détection d'une opération de fin de glissement d'une opération de glissement, dans lequel l'opération de glissement est utilisée pour glisser le contenu de la première commande de la première fenêtre vers la seconde fenêtre,
dans lequel le transfert du contenu de la première commande vers la seconde fenêtre comprend :
la détection, par la seconde unité de glissement, d'une opération de fin de glissement ;
la détermination, par la seconde unité de glissement, d'une première commande d'entrée dans la seconde fenêtre sur la base d'un emplacement de l'opération de fin de glissement ; et
l'utilisation, par la seconde unité de glissement, du contenu de la première commande comme contenu d'entrée de la première commande d'entrée,
dans lequel la détermination, par la seconde unité de glissement, d'une première commande d'entrée dans la seconde fenêtre sur la base d'un emplacement de l'opération de fin de glissement comprend :
la détermination, par la seconde unité de glissement sur la base de l'emplacement de l'opération de fin de glissement, qu'une fenêtre sur laquelle l'opération de fin de glissement est réalisée est la seconde fenêtre ; et
l'utilisation, par la seconde unité de glissement, d'une commande dans un état d'entrée dans la seconde fenêtre comme première commande d'entrée, ou l'utilisation d'une commande d'entrée qui est la plus proche de l'emplacement de l'opération de fin de glissement dans la seconde fenêtre comme première commande d'entrée, **caractérisé en ce que**
une priorité d'utilisation de la commande dans l'état d'entrée dans la seconde fenêtre comme première commande d'entrée est supérieure à une priorité d'utilisation de la commande d'entrée qui est la plus proche de l'emplacement de l'opération de fin de glissement dans la seconde fenêtre comme première commande d'entrée.
